# EUROPÄISCHE PATENTSCHRIFT

(11) **EP 4 589 164 B1**
(45) Veröffentlichungstag und Bekanntmachung des Hinweises auf die Patenterteilung: **11.03.2026**
(21) Anmeldenummer: 25152158.9
(22) Anmeldetag: 16.01.2025
(51) Int. Cl.: F16D 11/00, F16D 23/12

(54) **KUPPLUNGSEINRICHTUNG**
COUPLING DEVICE
DISPOSITIF D'ACCOUPLEMENT

(30) Priorität: 18.01.2024 DE 102024101411
(43) Veröffentlichungstag der Anmeldung: 23.07.2025
(73) Patentinhaber: Nicolai, Karlheinz, 31089 Duingen Lübbrechtsen (DE)
(72) Erfinder: Nicolai, Karlheinz, 31089 Duingen Lübbrechtsen (DE)
(74) Vertreter: Wallinger Ricker Schlotter Tostmann

(56) Entgegenhaltungen:
- EP-A1- 4 249 361
- DE-A1- 19 903 441
- US-A1- 2023 234 535

## Beschreibung

Die Erfindung betrifft eine Kupplungseinrichtung für ein Fahrrad und eine Getriebeschaltung für ein Fahrrad mit einer solchen Kupplungseinrichtung.

Das Fahrrad kann auch ein Elektrofahrrad sein. Elektrofahrräder weisen einen Hilfsantrieb auf, der die Tretbewegung eines Radfahrers oder einer Radfahrerin unterstützt. Eine Gangschaltung sorgt bei einem Fahrrad, auch bei einem Elektrofahrrad, dafür, dass über einen weiten Geschwindigkeitsbereich mit etwa gleichbleibender Trittfrequenz pedaliert werden kann.

Es werden nach dem Stand der Technik heute die folgenden Gangschaltungen an Fahrrädern und Elektrofahrrädern verwendet:
1) Nabenschaltungen
2) Kettenschaltungen
3) Tretlagerschaltungen

Bei der Bewältigung unterschiedlicher Aufgaben innerhalb verschiedener Umgebungen, in denen Fahrräder zum Einsatz kommen, ist in den meisten Fällen ein schaltbares Getriebe unabdingbar. Wo im Stadtverkehr ohne Berge noch ein Singlespeed, also ein Fahrrad mit einer nicht schaltbaren Übersetzung, ausreichen mag, stößt deren Anwendung schon bei größeren Distanzen, wie sie z. B. im ländlichen Raum überwiegen, an Grenzen.

Steile Anstiege oder Abfahrten im Mountainbike-Bereich, schwere Lasten im Personen- oder Warenverkehr, ergonomische Aspekte bei Langstreckenfahrten oder immer größere Maximalgeschwindigkeiten setzen eine von dem Fahrer oder der Fahrerin während der Fahrt veränderbare Übersetzung des aufgewendeten Drehmoments und der Drehzahl voraus. So kann der Fahrer oder die Fahrerin die Trittfrequenz und die Pedalkraft auf die jeweilige Situation anpassen.

Bei einem Fahrrad werden die genannten Getriebe meist auf drei unterschiedliche Arten ausgeführt: als schaltbares Zugmittelgetriebe, Planetenradgetriebe oder Stirnradgetriebe.

Planetenradgetriebe finden meist Anwendung innerhalb des Nabengehäuses am Hinterrad, hingegen sind Stirnradgetriebe oftmals in der Nähe der Tretlagerwelle angeordnet.

Zugmittelgetriebe stellen überwiegend die Verbindung der Tretlagerwelle mit der Hinterradnabe her, insbesondere in Form einer Kettenschaltung, wie im Folgenden beschrieben.

In den vergangenen sechzig Jahren hat sich bei Fahrrädern der Kettenantrieb mit einer Schaltmöglichkeit an der Hinterradachse stark verbreitet. Dazu wird am Rahmen, der den tragenden Bestandteil des Fahrrades mit all seinen Aufnahmepunkten für die Vorderradgabel, die Sattelstütze sowie das Hinterrad bildet, ein drehbares Tretlager mit einem oder mehreren Kettenblättern montiert. Auf der Nabe des Hinterrades befindet sich eine aus bis zu dreizehn verschieden großen Ritzeln bestehende Kassette. An einem Ausfallende, das die Verbindung vom Rahmen zur Hinterachse herstellt, wird ein Schaltwerk angebracht, dessen Aufgabe es ist, die Kette auf den Ritzeln der Kassette zu führen und Schaltvorgänge zu ermöglichen. Zusätzlich kann durch einen meist am Sitzrohr angebrachten Umwerfer am Tretlager zwischen verschiedenen Kettenblättern gewechselt werden. Fahrräder mit einem Schaltungssystem wie dem oben beschriebenen werden im Allgemeinen als Fahrräder mit Kettenschaltung bezeichnet.

Da bei einem Fahrrad mit Kettenschaltung konstruktionsbedingt die Komponenten außen am Rahmen montiert sind, sind sie Umwelteinflüssen besonders stark ausgesetzt, was einen erhöhten Verschleiß bedeutet und wobei damit einhergehend der Wirkungsgrad nach kurzer Nutzungsdauer stark abnimmt. Die dadurch bedingten kurzen Wartungsintervalle, insbesondere bei Fahrrädern mit Hilfsantrieb, werden aufgrund des notwendigen Austauschs der drehmomentübertragenden Bauteile des Zugmittelgetriebes sehr kostenintensiv. Hinzu kommt, dass der Kettenumwerfer in exponierter Lage am Hinterrad einer erhöhten Gefahr der Beschädigung durch Stürze oder Ähnlichem ausgesetzt ist.

Bei sogenannten Nabenschaltungen sowie Getrieben in der Nähe des Tretlagers, im Folgenden Tretlagergetriebe genannt, sind die Bauteile innerhalb eines Gehäuses geschützt vor äußeren Einflüssen. Dabei weist eine Nabenschaltung meist ein einzelnes oder mehrere hintereinander geschaltete Planetenradgetriebe auf, welche sich die Drehachse des Hinterrades als koaxiale Rotationsachse der einzelnen Getriebestufen teilen. Nabenschaltungen werden auch oft Getriebenaben genannt.

Nabenschaltungen sind somit schaltbare Planetengetriebe, die im Nabengehäuse des Hinterrades eingebaut sind. Die Nabenschaltungen sind von der Außenumgebung abgekapselt in einem Gehäuse angeordnet und daher weitgehend wartungsfrei. Nachteilig ist jedoch bei Nabenschaltungen das hohe Gewicht am Hinterrad, das zu einer ungünstigen Gewichtsverteilung führt. Nicht nur beim Tragen des Fahrrades, sondern auch in Kurvenfahrten oder bei sportlicher Fahrt im Gelände ist das hohe Gewicht an der Hinterradnabe störend.

Ein weiterer Nachteil der heute am Markt verfügbaren Nabenschaltungen ist die fehlende Schaltbarkeit unter Last. Der Fahrradfahrer oder die Fahrradfahrerin, der oder die unter Last bergauf zum Beispiel im sechsten Gang mit hohem Drehmoment pedaliert und einen Gang herunterschalten möchte, muss bei den üblichen Nabenschaltungen zunächst Last aus den Pedalen nehmen, um den Umschaltvorgang in den fünften Gang zu ermöglichen.

Das Drehmoment des Fahrers oder der Fahrerin wird meist über ein Zugmittelgetriebe zur Eingangswelle der Getriebenabe geführt, durch die Planetenstufen gewandelt und auf das Nabengehäuse übertragen, welches folglich die Ausgangswelle des Getriebes darstellt. Die Eingangswelle wird auch oft Antreiber genannt. Die am Nabengehäuse angebrachten Speichen verbinden das Getriebe mit der Felge, die mittels des Mantels das Drehmoment auf die Fahrbahn überträgt. Die Ausführung in Kombination mit einem Zahnriemen als Zugmittelgetriebe ist gegenüber einer Kette deutlich wartungsärmer und geschützter gegenüber äußeren Einflüssen.

Kettenschaltungen besitzen im Vergleich zu Nabenschaltungen eine verbesserte Schaltbarkeit unter Last. Wie schon erwähnt, besitzen Kettenschaltungen am Hinterrad viele stufenförmig im Paket nebeneinander angeordnete Kettenritzel, wobei der Umwerfer die Kette je nach dem eingelegten Gang auf einem bestimmten Ritzel führt und auf diese Weise eine bestimmte Übersetzung realisiert. Dieser Gangwechsel ist bei einer Kettenschaltung auch unter Last möglich.

Kettenschaltungen sind in der Vergangenheit dafür entwickelt worden, um ausschließlich die von einem Menschen erbrachte mechanische Tretleistung an das Hinterrad zu übertragen. Weist das Fahrrad darüber hinaus einen Hilfsantrieb auf, so sitzt dieser - bei den hier betrachteten Elektrofahrrädern - üblicherweise am Tretlager. Bei diesen sogenannten Mittelmotoren werden die Leistung des Radfahrers oder der Radfahrerin an der Tretkurbel und die Leistung des Elektromotors zusammengeführt und an die Schaltung weitergeleitet, wodurch die so übertragene Leistung sehr groß werden kann. Bei dieser Konfiguration kommen heute üblicherweise Kettenschaltungen oder Nabenschaltungen zum Einsatz, weil am Tretlager nicht ausreichend Platz für eine Schaltung zur Verfügung steht.

Wie ebenfalls schon erwähnt, sind Kettenschaltungen jedoch insofern nachteilig, als ihre Komponenten, nämlich die Ritzel an der Hinterradnabe, das wenigstens eine Kettenblatt sowie die Kette nebst Kettenumwerfer ungeschützt sind und daher leicht verschmutzen. Der Verschleiß wird aufgrund der beim Vorhandensein eines Hilfsantriebs hohen zu übertragenden Leistung deutlich verstärkt. Eine Kettenschaltung ist daher vergleichsweise wartungsintensiv. Ein Wartungsintervall kann bei einem Elektrofahrrad mit Kettenschaltung zwischen 600 und 1200 km liegen. Dies ist als Nachteil zu werten. Anstelle von oder zusammen mit Kettenschaltungen werden bei Elektrofahrrädern auch Nabenschaltungen am Hinterrad verwendet.

Eine vorteilhaftere Gewichtsverteilung ergibt sich, wenn die Gangschaltung mittig im Fahrrad positioniert ist, wie dies beispielsweise bei Tretlagerschaltungen der Fall ist. Allerdings sind Tretlagerschaltungen nach dem Stand der Technik recht groß, so dass um das Tretlager herum kein Platz für den Elektromotor bleibt. Zudem sind die Tretlagerschaltungen von sich aus bereits so schwer, dass das zusätzliche Gewicht eines Hilfsantriebs zu einem Elektrofahrrad führen würde, das für den Alltag oder für die Weiterfahrt bei leerer Batterie zu schwer wäre. Zusätzlich ist auch das Schaltverhalten unter Last bei Tretlagerschaltungen ähnlich schlecht wie bei den Nabenschaltungen.

Tretlagergetriebe sind meist Stirnradgetriebe, wie zum Beispiel aus der DE 10 2009 060 484 B4 bekannt, deren Gehäuse am Hauptrahmen des Fahrrades befestigt sind. So wird ein geschützter und kompakter Bauraum um die Tretlagerachse genutzt, um die Funktion des Getriebes zu erreichen. Die Eingangswelle eines Tretlagergetriebes ist dabei meist direkt mit den Kurbeln und Pedalen des Fahrrades verbunden. An der Ausgangswelle überträgt ebenfalls ein Zugmittelgetriebe das Drehmoment zum Hinterrad. Diese Form eines Fahrradgetriebes hat den Vorteil, dass das Gewicht des Getriebes an einem zentralen und tiefen Punkt liegt, was sich positiv auf den Schwerpunkt und so auf die Fahreigenschaften auswirkt. Eine sportliche Nutzung eines Fahrrades mit Tretlagerschaltung oder Nabenschaltung ist aus den oben angeführten Gründen allerdings nur schlecht möglich.

Bei Zahnradgetrieben werden die verschiedenen Getriebeübersetzungen, im Folgenden Gänge oder Gangstufen genannt, durch Kombinationen mehrerer Zahnradpaarungen bzw. deren einzelner Übersetzungen erreicht. Da sich in Stirn- und Planetenradgetrieben meist alle Zahnräder jeder Eingangs- oder Zwischenwelle jederzeit im Eingriff mit dem jeweils zugehörigen Zahnrad der folgenden Zwischen- oder Ausgangswelle befinden, muss jeweils ein Zahnrad einer Paarung frei drehbar auf seiner Welle gelagert werden können, ohne ein Drehmoment zu übertragen. Mittels schaltbarer Kupplungen können einzelne dieser freien Zahnräder mit der zugehörigen Welle oder einem im Drehmomentfluss folgenden Bauteil drehmomentübertragend verbunden werden. Die Aktivierung einzelner Kupplungen leitet so das Drehmoment durch die Zahnradpaarungen, welche in Summe die gewünschte Gesamtübersetzung eines Ganges ergeben.

Die Kupplungen können als radiale oder axiale Kupplungen, meist als formschlüssige Kupplungen, ausgeführt werden, welche überwiegend, nach dem Prinzip eines Freilaufs, nur in einer Drehrichtung Momente übertragen. In Fig. 9 und 10 der WO 98/52817 A1 ist als Beispiel die Funktion einer solchen radialen Kupplung gut zu erkennen.

Schaltbare Axialkupplungen sind meist als Klauenkupplungen ausgeführt und weisen je ein axial verschiebbares und ein axial festgesetztes Bauteil auf, wie ebenfalls in der WO 98/52817 A1 in Fig. 6 und 7 dargestellt.

Die Stirnverzahnung einer axialen Kupplung hat gegenüber einer radialen Kupplung mit Schaltklinken den Vorteil einer wesentlich größeren kraftübertragenden Fläche bei gleichem Bauraum. So wird in vorteilhafter Weise die Flächenpressung verringert.

Die Steuerung der axialen Kupplungen übernimmt, wie beispielsweise in der WO 98/52817 A1 dargestellt, ein sogenanntes Betätigungsorgan, im Folgenden auch Schalttrommel genannt. Dabei handelt es sich um einen zylindrischen Körper, in dem gewendelte Nuten und/oder Erhebungen und Vertiefungen eingeprägt sind. Man betrachte hierzu auch Fig. 15 der WO 98/52817 A1. Innerhalb von Nabenschaltungen wird die Schalttrommel meist in einer feststehenden Hohlachse, im Folgenden als Hauptachse bezeichnet, drehbar gelagert angeordnet, wobei die Winkelposition der Schalttrommel in Relation zur Hauptachse die Zustände der einzelnen Kupplungen (aktiv, inaktiv) für die Gänge definiert. Diese Winkelposition der Hohlachse kann durch den Fahrer oder die Fahrerin, entweder mechanisch durch Bowdenzüge oder elektrisch über einen Aktuator, vom Lenker des Fahrrades aus gesteuert werden.

Betrachtet man eine einzelne axiale Kupplung gemäß der WO 98/52817 A1, so werden im eingekuppelten Zustand die beiden Hälften der Stirnverzahnung meist mit Hilfe einer Feder zusammengehalten. Zum Trennen der Axialkupplung wird meist die angefederte Kupplungshälfte mit Hilfe eines Schieberings, der mit der Schalttrommel in Verbindung steht, axial so bewegt, dass die Kupplung geöffnet wird. Beim Schalten unter Last stehen bestimmte Funktionsflächen der beweglichen Kupplungshälfte in reibender Verbindung zu benachbarten Flächen der festen Kupplungshälfte. Um unter Last von einem Gang in einen anderen Gang zu schalten, muss zunächst die Haftreibung überwunden werden. Darauf folgend muss das bewegliche Kupplungsbauteil unter dem Einfluss der Gleitreibung weiter verschoben werden. Aufgrund von hohen Reibkräften ist ein Schalten unter Last nur schwer oder gar nicht möglich.

Die US 2023/0234535 A1 offenbart ein Verfahren zur Wegfahrsperre eines Fahrzeugs, wobei ein Antriebsstrang des Fahrzeugs eine Kupplung, insbesondere einen Freilauf, aufweist. Dabei wird nach einer Eingabe eines Nutzers zur Aktivierung der Wegfahrsperre ein Aktuator zur Aktivierung der Wegfahrsperre angesteuert. In einer Ausführung ist der Aktuator dazu eingerichtet, einen zylindrischen Stift in einer am Umfang der Kupplung und zwischen einer ersten und einer zweiten Kupplungskomponente angeordneten Nut zu positionieren, wobei der Stift bei einer Drehung der Kupplung durch die Nut geführt wird, und wobei die Nut eine Verengung aufweist, sodass bei einer Drehung der Kupplung die erste und/oder die zweite Kupplungskomponente in axialer Richtung mittels des Stifts und der Verengung verschoben wird.

Die DE 199 03 441 A1 offenbart eine ein- und ausschaltbare Kupplung für eine Antriebseinheit für Fahrzeuge, insbesondere für Fahrräder mit einem Elektromotor, mit einer schaltbaren Klauenkupplung zwischen dem Getriebe und dem Antriebszahnrad zur Überbrückung eines Freilaufs in der der Antriebsdrehrichtung entgegengesetzten Drehrichtung. Zur Ein- und Ausschaltung der Klauenkupplung ist eine Betätigung mit einem Knebel vorgesehen, die von Hand betätigt werden kann. Ein Schiebeteil mit einem Knebelgehäuse wirkt auf die Klauen, wobei der Knebel dem Knebelgehäuse jeweils eine definierte Position zuweist. Dies bewirkt eine saubere Ansteuerung zweier Endstellungen für die Klauenkupplung zur Überbrückung des Freilaufs.

Die nachveröffentlichte Druckschrift DE 10 2023 211 468 B3 desselben Anmelders zeigt eine Kupplungseinrichtung in Form einer Klauenkupplung, bei der die Seitenflächen der stirnseitigen Zähne (der Klauen) der beiden Kupplungshälften nicht in einer Radialebene liegen, welche durch die Drehachse der jeweiligen Kupplungshälfte verläuft, sondern gegenüber dieser Radialebene geneigt sind. Dies kann bewirken, dass bei einer Beaufschlagung der antreibenden Kupplungshälfte mit einem Betriebsdrehmoment die stirnseitigen Zähne aneinander "abgleiten" können und die Kupplungseinrichtung sich öffnet, sofern sie nicht zwangsweise im geschlossenen Zustand gehalten, also verriegelt, wird. Mit anderen Worten kann die Klauenkupplung in diesem Zustand als eine Rutschkupplung fungieren. Auf diese Weise kann das Öffnen der Kupplungseinrichtung durch das Betriebsdrehmoment, welches beispielsweise von dem Fahrer oder der Fahrerin des Fahrrades aufgebracht wird, dessen Getriebeschaltung die Kupplungseinrichtung enthält, unterstützt werden. Damit ist auch ein Schalten unter Last leichter möglich, da das Betriebsdrehmoment selbst zur Einleitung des Öffnungsvorgangs der Kupplungseinrichtung und damit des Schaltvorgangs eingesetzt werden kann.

Da bei dem umgekehrten Vorgang, d. h. dem Schließen der Kupplungseinrichtung, ebenfalls gegen das unterstützte Öffnen der Kupplungseinrichtung mit Hilfe der Betätigungseinrichtung gearbeitet werden muss, sind größere Kräfte und/oder weitere Maschinenelemente wie zum Beispiel Federn notwendig.

Die Aufgabe der vorliegenden Erfindung besteht darin, eine Kupplungseinrichtung mit einer verbesserten Schaltfähigkeit unter Last bereitzustellen.

Diese Aufgabe wird gelöst durch eine Kupplungseinrichtung gemäß Anspruch 1 bzw. durch eine Getriebeschaltung für ein Fahrrad gemäß Anspruch 20 mit einer derartigen Kupplungseinrichtung. Vorteilhafte Weiterbildungen der Erfindung sind in den Unteransprüchen enthalten.

Die betrachtete Kupplungseinrichtung ist zur selektiven Übertragung eines Drehmoments von einer ersten Welle oder Nabe auf eine zweite Welle oder Nabe, insbesondere für eine Getriebeschaltung für ein Fahrrad, vorgesehen. Sie weist eine erste Kupplungshälfte, welche mit der ersten Welle oder Nabe drehfest verbunden ist, und eine zweite Kupplungshälfte, welche mit der zweiten Welle oder Nabe drehfest verbunden ist, auf. Weiterhin weist sie eine erste Öffnungseinrichtung auf, welche dazu eingerichtet ist, aus einem Betriebsdrehmoment, mit welchem die erste Kupplungshälfte, insbesondere durch einen Betrieb eines Fahrrades mit einer Getriebeschaltung, welche die Kupplungseinrichtung enthält, beaufschlagt ist, eine erste Öffnungskraft zu erzeugen, durch welche die Kupplungseinrichtung von einem geschlossenen Zustand, in welchem ein Drehmoment von der ersten Kupplungshälfte auf die zweite Kupplungshälfte übertragbar ist, in einen geöffneten Zustand, in welchem kein Drehmoment von der ersten Kupplungshälfte auf die zweite Kupplungshälfte übertragbar ist, bringbar ist. Außerdem weist sie eine Betätigungseinrichtung auf, welche zur Steuerung der ersten Öffnungseinrichtung eingerichtet ist.

Erfindungsgemäß ist die erste Öffnungseinrichtung räumlich getrennt von dem Drehmomentübertragungsbereich der Kupplungseinrichtung, d. h. demjenigen räumlichen Bereich, an dem im geschlossenen Zustand der Kupplungseinrichtung eine Drehmomentübertragung von der ersten Kupplungshälfte auf die zweite Kupplungshälfte erfolgen kann, angeordnet.

Auf diese Weise können bei der Konstruktion der Kupplungseinrichtung mehr Freiheitsgrade zur Verfügung stehen, als wenn der Drehmomentübertragungsbereich neben der eigentlichen Funktion der Drehmomentübertragung zusätzlich die Funktion der Öffnungsunterstützung der Kupplungseinrichtung erfüllen muss. Insbesondere wird es ermöglicht, die beiden räumlichen Bereiche - den Drehmomentübertragungsbereich und die erste Öffnungseinrichtung - getrennt voneinander auszulegen und zu optimieren, ohne Wechselwirkungen zwischen den beiden genannten Funktionen berücksichtigen zu müssen. Dies kann insbesondere auch die Konstruktion der Betätigungseinrichtung erleichtern, welche nicht mehr unmittelbar auf den Drehmomentübertragungsbereich einwirken muss.

Gleichzeitig wird die Aufgabe gelöst, die Schaltfähigkeit der Kupplungseinrichtung unter Last zu verbessern, indem das Öffnen der Kupplungseinrichtung durch das Betriebsdrehmoment unterstützt wird. Dadurch wird die Schaltfähigkeit unter Last verbessert, da das Betriebsdrehmoment selbst zur Einleitung des Öffnungsvorgangs der Kupplungseinrichtung und damit des Schaltvorgangs eingesetzt werden kann.

In einer bevorzugten Ausführung der Erfindung ist die erste Öffnungseinrichtung radial weiter außen als der Drehmomentübertragungsbereich angeordnet.

Diese räumliche Anordnung kann eine kompakte Konstruktion der Kupplungseinrichtung mit einer geringen axialen Baulänge ergeben. Außerdem kann die radial weiter außen liegende erste Öffnungseinrichtung für die Verbindung mit der Betätigungseinrichtung konstruktiv einfacher zugänglich sein.

In einer weiteren bevorzugten Ausführung der Erfindung ist eine bewegliche Kupplungshälfte, welche eine der ersten Kupplungshälfte und der zweiten Kupplungshälfte ist, in axialer Richtung der ersten Welle oder Nabe bzw. der zweiten Welle oder Nabe beweglich, und die erste Öffnungseinrichtung weist auf:
- wenigstens eine an der beweglichen Kupplungshälfte angeordnete erste Kulissenfläche, die sich in einer ersten Erstreckungsrichtung im Wesentlichen in Umfangsrichtung der beweglichen Kupplungshälfte erstreckt und die eine derartige erste Krümmung aufweist, dass sich eine Position in axialer Richtung eines Punktes auf der ersten Kulissenfläche entlang der ersten Erstreckungsrichtung ändert, und
- wenigstens einen ersten Kulissenfolger, der dazu eingerichtet ist, bei einer Rotation der beweglichen Kupplungshälfte die erste Kulissenfläche entlang der ersten Erstreckungsrichtung zu kontaktieren, dadurch die erste Öffnungskraft zu erzeugen und dadurch eine Bewegung der beweglichen Kupplungshälfte in axialer Richtung zu bewirken, wodurch die Kupplungseinrichtung von dem geschlossenen Zustand in den geöffneten Zustand gebracht wird.

Dabei ist die Betätigungseinrichtung dazu eingerichtet, den wenigstens einen ersten Kulissenfolger mit der ersten Kulissenfläche in Eingriff und von der ersten Kulissenfläche außer Eingriff zu bringen.

Hierdurch kann auf einfache Weise aus dem Betriebsdrehmoment die erste Öffnungskraft erzeugt werden, indem der wenigstens eine erste Kulissenfolger bei seiner Bewegung entlang der ersten Erstreckungsrichtung eine Änderung der Position in axialer Richtung seines Berührungspunktes mit der wenigstens einen ersten Kulissenfläche und damit eine Bewegung der gesamten wenigstens einen ersten Kulissenfläche und, da die wenigstens eine erste Kulissenfläche an der beweglichen Kupplungshälfte angeordnet ist, auch der gesamten beweglichen Kupplungshälfte bewirkt. Die wenigstens eine erste Kulissenfläche ist vorzugsweise derart orientiert, dass die Bewegung der beweglichen Kupplungshälfte hierbei gerade in der Öffnungsrichtung der Kupplungseinrichtung erfolgt, also in derjenigen axialen Richtung, in der sich die Kupplungseinrichtung von dem geschlossenen Zustand in den geöffneten Zustand bringen lässt. Weiterhin ist der wenigstens eine erste Kulissenfolger vorzugsweise derart angeordnet, dass sich seine Position in axialer Richtung bei seiner Bewegung entlang der ersten Erstreckungsrichtung nicht verändert.

In einer bevorzugten Variante dieser Ausführung der Erfindung bilden wenigstens eine erste Kulissenfläche und der wenigstens eine erste Kulissenfolger zusammen ein Keilgetriebe. Auf diese Weise erzeugen sie zusammen die erste Öffnungskraft und damit die Bewegung der beweglichen Kupplungshälfte in axialer Richtung.

Der Begriff "Keilgetriebe" wird vorliegend im üblichen mechanischen Sinne verwendet als ein Getriebe, welches aus einem ersten Körper mit einer ersten Fläche und einem zweiten Körper mit einer zweiten Fläche gebildet ist, wobei die erste und die zweite Fläche in Kontakt zueinander stehen und relativ zueinander bewegbar sind, wobei die erste und/oder die zweite Fläche gegenüber einer ersten Richtung geneigt oder gekrümmt ist und wobei der erste Körper in der ersten Richtung bewegbar und der zweite Körper zumindest an einer Bewegung in der ersten Richtung gehindert ist, wodurch aus einer Bewegung des ersten Körpers in der ersten Richtung eine Bewegung des ersten und/oder des zweiten Körpers mit einer Komponente orthogonal zu der ersten Richtung resultiert. Aus dem Neigungswinkel oder der Krümmung der ersten bzw. der zweiten Fläche gegenüber der ersten Richtung resultiert gleichzeitig eine Kraftübersetzung zwischen der in den ersten Körper eingeleiteten Kraft und der auf den ersten bzw. den zweiten Körper orthogonal zu der ersten Richtung wirkenden Kraftkomponente.

Vorliegend ist zumindest die erste Kulissenfläche aufgrund der ersten Krümmung gegenüber der ersten Erstreckungsrichtung gekrümmt. Wenn der Kulissenfolger in der Position, in der er die erste Kulissenfläche kontaktiert, unbeweglich ist, wird somit bei einer Rotation der beweglichen Kupplungshälfte eine auf die bewegliche Kupplungshälfte wirkende Kraft mit einer Komponente orthogonal zu der ersten Erstreckungsrichtung und damit in axialer Richtung, d. h. die erste Öffnungskraft, erzeugt, und die bewegliche Kupplungshälfte bewegt sich in axialer Richtung.

In einer bevorzugten Variante dieser Ausführung der Erfindung weist die erste Öffnungseinrichtung weiterhin eine erste Offenhaltefläche auf, welche derart an der beweglichen Kupplungshälfte angeordnet ist, dass sich die Kupplungseinrichtung bei einer Kontaktierung der ersten Offenhaltefläche durch den wenigstens einen ersten Kulissenfolger im geöffneten Zustand befindet, wobei die erste Offenhaltefläche angrenzend an einen Bereich der wenigstens einen ersten Kulissenfläche angeordnet ist, bei dessen Kontaktierung durch den wenigstens einen ersten Kulissenfolger sich die Kupplungseinrichtung im geöffneten Zustand befindet.

Auf diese Weise lässt sich anschließend an die Bewegung der beweglichen Kupplungshälfte in der Öffnungsrichtung der Kupplungseinrichtung und dem dadurch bewirkten Öffnen der Kupplungseinrichtung erreichen, dass die Kupplungseinrichtung im geöffneten Zustand bleibt. Die erste Offenhaltefläche hat vorzugsweise die Form einer ringförmigen, ebenen Fläche, welche orthogonal zur Drehachse der beweglichen Kupplungshälfte und konzentrisch zu dieser angeordnet ist. Somit kann der wenigstens eine erste Kulissenfolger die erste Offenhaltefläche beliebig lange, insbesondere über mehrere Umdrehungen der beweglichen Kupplungshälfte hinweg, kontaktieren, ohne dass sich die axiale Position der beweglichen Kupplungshälfte ändert. Die Kupplungseinrichtung kann somit ständig offengehalten werden, sobald der wenigstens eine erste Kulissenfolger die erste Offenhaltefläche kontaktiert. Auch hierbei ist der wenigstens eine erste Kulissenfolger vorzugsweise derart angeordnet, dass sich seine Position in axialer Richtung bei einer Kontaktierung der ersten Offenhaltefläche nicht verändert.

In einer bevorzugten Variante der Ausführung der Erfindung mit wenigstens einer ersten Kulissenfläche und wenigstens einem ersten Kulissenfolger ist der wenigstens eine erste Kulissenfolger durch eine Bewegung des wenigstens einen ersten Kulissenfolgers in radialer Richtung der beweglichen Kupplungshälfte, insbesondere durch einen Hebel- oder Schiebermechanismus, mit der wenigstens einen ersten Kulissenfläche in Eingriff und/oder von der wenigstens einen ersten Kulissenfläche außer Eingriff bringbar.

Hierdurch wird auf einfache Weise die Funktion der Betätigungseinrichtung realisiert, den wenigstens einen ersten Kulissenfolger mit der wenigstens einen ersten Kulissenfläche in Eingriff und von der wenigstens einen ersten Kulissenfläche außer Eingriff zu bringen. Eine Bewegung des wenigstens einen ersten Kulissenfolgers in radialer Richtung der beweglichen Kupplungshälfte eignet sich hierfür insbesondere dann besonders gut, wenn die erste Öffnungseinrichtung radial weiter außen als der Drehmomentübertragungsbereich angeordnet ist, denn in diesem Fall ist auch die wenigstens eine erste Kulissenfläche von radial außen besonders gut zugänglich. Auch ein Hebel- oder Schiebermechanismus, über den der wenigstens eine erste Kulissenfolger von radial außen in die wenigstens eine erste Kulissenfläche eingeschwenkt bzw. eingeschoben wird, ist ein einfach zu konstruierendes Bauelement, welches sich zudem durch eine mechanische Betätigungseinrichtung einfach steuern lässt.

In einer bevorzugten Variante dieser Ausführung der Erfindung wird die Bewegung des wenigstens einen ersten Kulissenfolgers in radialer Richtung der beweglichen Kupplungshälfte beim Ineingriffbringen mit der wenigstens einen ersten Kulissenfläche wenigstens teilweise durch eine Feder bewirkt, insbesondere durch das Entspannen der Feder.

Die Feder führt somit, auch bei nicht betätigter Betätigungseinrichtung, zu einem Öffnen der Kupplungseinrichtung. Diese Variante stellt damit eine einfache Möglichkeit dar, eine im Ruhezustand geöffnete Kupplungseinrichtung zu realisieren. Dies ist insbesondere dann vorteilhaft, wenn die Betätigungseinrichtung ausfällt, beispielsweise durch eine Unterbrechung einer elektrischen Verbindung oder einen sonstigen Defekt einer elektrischen Betätigungseinrichtung, da sich dann die Kupplungseinrichtung - und ggf. alle Kupplungseinrichtungen in dem Getriebe - öffnet und so ein Blockieren des Getriebes vermieden wird.

In einer weiteren bevorzugten Variante der Ausführung der Erfindung mit wenigstens einer ersten Kulissenfläche und wenigstens einem ersten Kulissenfolger weist die erste Öffnungseinrichtung eine Mehrzahl von ersten Kulissenflächen auf, welche entlang der Umfangsrichtung der beweglichen Kupplungshälfte angeordnet sind.

Auf diese Weise können die einzelnen, über den Umfang der beweglichen Kupplungshälfte verteilt angeordneten ersten Kulissenflächen jeweils kürzer ausgebildet sein, als wenn nur eine einzige erste Kulissenfläche vorhanden wäre. Dadurch können auch die Erzeugung der ersten Öffnungskraft und damit die Öffnung der Kupplungseinrichtung schneller erfolgen, sobald der wenigstens eine erste Kulissenfolger durch die Betätigungseinrichtung mit einer der ersten Kulissenflächen in Eingriff gebracht ist.

In einer weiteren bevorzugten Variante der Ausführung der Erfindung mit wenigstens einer ersten Kulissenfläche und wenigstens einem ersten Kulissenfolger weist die erste Öffnungseinrichtung eine Mehrzahl von ersten Kulissenfolgern auf, welche entlang der Umfangsrichtung der beweglichen Kupplungshälfte angeordnet sind.

Auf diese Weise lässt sich eine gleichmäßigere Erzeugung der ersten Öffnungskraft, verteilt auf mehrere, über dem Umfang der beweglichen Kupplungshälfte verteilte Stellen erreichen. Durch die Verteilung der ersten Öffnungskraft auf die mehreren ersten Kulissenfolger wird außerdem jeder einzelne erste Kulissenfolger entsprechend weniger belastet. Insbesondere wird die jeweils zwischen einem ersten Kulissenfolger und der von diesem kontaktierten ersten Kulissenfläche wirkende Reibungskraft entsprechend vermindert. Vorzugsweise sind die mehreren ersten Kulissenfolger in im Wesentlichen gleichen Abständen entlang der Umfangsrichtung der beweglichen Kupplungshälfte angeordnet.

Erfindungsgemäß weist die Kupplungseinrichtung eine zweite Öffnungseinrichtung auf, welche dazu eingerichtet ist, ohne Verwendung des Betriebsdrehmoments eine zweite Öffnungskraft zu erzeugen, durch welche die Kupplungseinrichtung von dem geschlossenen Zustand in den geöffneten Zustand bringbar ist, wobei die Betätigungseinrichtung zur Steuerung der zweiten Öffnungseinrichtung eingerichtet ist.

Die zweite Öffnungseinrichtung stellt somit eine zusätzliche Möglichkeit bereit, um mittels der zweiten Öffnungskraft die Kupplungseinrichtung von dem geschlossenen Zustand in den geöffneten Zustand zu bringen. Vorzugsweise werden die erste und die zweite Öffnungseinrichtung bei verschiedenen Betriebsbedingungen der Kupplungseinrichtung wirksam, insbesondere bei verschiedenen Betriebsdrehmomenten. Dabei ist ein Betriebsdrehmoment, bei dem die zweite Öffnungseinrichtung wirksam ist, vorzugsweise kleiner als ein Betriebsdrehmoment, bei dem die erste Öffnungseinrichtung wirksam ist.

Wenn an dieser Stelle von einer zweiten Öffnungskraft die Rede ist, so ist diese Kraft vorzugsweise unabhängig von der ersten Öffnungskraft. Sie entsteht also nicht zwangsläufig zusätzlich zur ersten Öffnungskraft.

In dieser Ausführung der Erfindung ist die Kupplungseinrichtung mit Hilfe der zweiten Öffnungseinrichtung in der Lage, auch im Stillstand oder bei einer geringen Drehzahl die zweite Öffnungskraft zu erzeugen, durch welche die Kupplungseinrichtung von dem geschlossenen Zustand in den geöffneten Zustand bringbar ist.

Bei einer Verwendung der erfindungsgemäßen Kupplungseinrichtung in einer Getriebeschaltung für ein Fahrrad wird die erste Öffnungseinrichtung vorzugsweise dann wirksam, wenn der Fahrer oder die Fahrerin während der Fahrt in die Pedale tritt, wodurch ein - möglicherweise recht großes - Betriebsdrehmoment an der Kupplungseinrichtung anliegt, und gleichzeitig einen anderen Gang einlegen möchte, d. h. wenn er oder sie unter Last schalten will. In diesem Fall wird das Betriebsdrehmoment genutzt, um eine erste Öffnungskraft für die Kupplungseinrichtung zu erzeugen.

Die zweite Öffnungseinrichtung wird in einer Getriebeschaltung für ein Fahrrad dagegen vorzugsweise dann wirksam, wenn der Fahrer oder die Fahrerin während der Fahrt nicht oder nur leicht oder langsam in die Pedale tritt und dabei einen anderen Gang einlegen möchte oder wenn er oder sie im Stand schalten will, d. h. wenn ohne oder nur unter geringer Last geschaltet werden soll. In diesem Fall steht kein oder nur ein geringes Betriebsdrehmoment an der Kupplungseinrichtung zur Verfügung. Umgekehrt muss aber auch keine hohe Reibungskraft beim Öffnen der Kupplung überwunden werden, d. h. es muss nur eine geringe Öffnungskraft für die Kupplung aufgebracht werden. Somit kann eine zweite Öffnungskraft durch die zweite Öffnungseinrichtung und damit ohne Verwendung des Betriebsdrehmoments erzeugt werden, um die Kupplungseinrichtung zu öffnen.

Die Betätigungseinrichtung ist in dieser Ausführung der Erfindung sowohl zur Steuerung der ersten Öffnungseinrichtung als auch zur Steuerung der zweiten Öffnungseinrichtung eingerichtet.

In einer bevorzugten Variante dieser Ausführung der Erfindung ist die zweite Öffnungseinrichtung radial weiter außen als der Drehmomentübertragungsbereich angeordnet.

Hierdurch können sich die gleichen Vorteile ergeben wie bei der entsprechenden Anordnung der ersten Öffnungseinrichtung.

In einer weiteren bevorzugten Variante dieser Ausführung der Erfindung weist die zweite Öffnungseinrichtung auf:
- wenigstens eine an der beweglichen Kupplungshälfte angeordnete zweite Kulissenfläche, die sich in einer zweiten Erstreckungsrichtung im Wesentlichen in radialer Richtung der beweglichen Kupplungshälfte erstreckt und die eine derartige zweite Krümmung aufweist, dass sich eine Position in axialer Richtung eines Punktes auf der wenigstens einen zweiten Kulissenfläche entlang der zweiten Erstreckungsrichtung ändert, und
- wenigstens einen zweiten Kulissenfolger, der dazu eingerichtet ist, die wenigstens eine zweite Kulissenfläche entlang der zweiten Erstreckungsrichtung zu kontaktieren, dadurch die zweite Öffnungskraft zu erzeugen und dadurch eine Bewegung der beweglichen Kupplungshälfte in axialer Richtung zu bewirken, wodurch die Kupplungseinrichtung von dem geschlossenen Zustand in den geöffneten Zustand gebracht wird,
wobei die Betätigungseinrichtung dazu eingerichtet ist, den wenigstens einen zweiten Kulissenfolger mit der wenigstens einen zweiten Kulissenfläche in Eingriff zu bringen, entlang der zweiten Erstreckungsrichtung zu bewegen und von der zweiten Kulissenfläche außer Eingriff zu bringen.

Hierdurch kann auf einfache Weise ohne Verwendung des Betriebsdrehmoments die zweite Öffnungskraft erzeugt werden, indem der wenigstens eine zweite Kulissenfolger bei seiner Bewegung entlang der zweiten Erstreckungsrichtung eine Änderung der Position in axialer Richtung seines Berührungspunktes mit der wenigstens einen zweiten Kulissenfläche und damit eine Bewegung der gesamten zweiten Kulissenfläche und, da die zweite Kulissenfläche an der beweglichen Kupplungshälfte angeordnet ist, auch der gesamten beweglichen Kupplungshälfte bewirkt. Die wenigstens eine zweite Kulissenfläche ist vorzugsweise derart orientiert, dass die Bewegung der beweglichen Kupplungshälfte hierbei gerade in der Öffnungsrichtung der Kupplungseinrichtung erfolgt, also in derjenigen axialen Richtung, in der sich die Kupplungseinrichtung von dem geschlossenen Zustand in den geöffneten Zustand bringen lässt. Weiterhin ist der wenigstens eine zweite Kulissenfolger vorzugsweise derart angeordnet, dass sich seine Position in axialer Richtung bei seiner Bewegung entlang der zweiten Erstreckungsrichtung nicht verändert.

In einer bevorzugten Variante dieser Ausführung der Erfindung bilden wenigstens eine zweite Kulissenfläche und der wenigstens eine zweite Kulissenfolger zusammen ein Keilgetriebe. Auf diese Weise erzeugen sie zusammen die zweite Öffnungskraft und damit die Bewegung der beweglichen Kupplungshälfte in axialer Richtung.

In diesem Fall ist zumindest die zweite Kulissenfläche aufgrund der zweiten Krümmung gegenüber der zweiten Erstreckungsrichtung gekrümmt. Wenn der Kulissenfolger sich bei der Kontaktierung der zweiten Kulissenfläche in der zweiten Erstreckungsrichtung bewegt, wird somit eine auf die bewegliche Kupplungshälfte wirkende Kraft mit einer Komponente orthogonal zu der zweiten Erstreckungsrichtung und damit in axialer Richtung, d. h. die zweite Öffnungskraft, erzeugt, und die bewegliche Kupplungshälfte bewegt sich in axialer Richtung.

Im Gegensatz zu der ersten Erstreckungsrichtung der wenigstens einen ersten Kulissenfläche verläuft die zweite Erstreckungsrichtung der wenigstens einen zweiten Kulissenfläche nicht in Umfangsrichtung, sondern in radialer Richtung der beweglichen Kupplungshälfte. Eine Bewegung des wenigstens einen zweiten Kulissenfolgers entlang der zweiten Erstreckungsrichtung bei dessen Kontaktierung der wenigstens einen zweiten Kulissenfläche ist somit unabhängig von einer Rotation der beweglichen Kupplungshälfte. Insbesondere kann eine solche Bewegung des wenigstens einen zweiten Kulissenfolgers auch bei stillstehender beweglicher Kupplungshälfte erfolgen, also beispielsweise im Stand des Fahrrades, dessen Getriebeschaltung die Kupplungseinrichtung enthält. Da die Relativbewegung zwischen der wenigstens einen zweiten Kulissenfläche und dem wenigstens einen zweiten Kulissenfolger - anders als bei der ersten Öffnungseinrichtung - nicht aus der Rotation der beweglichen Kupplungshälfte erzeugt werden kann, ist die Betätigungseinrichtung zusätzlich dazu eingerichtet, den wenigstens einen zweiten Kulissenfolger entlang der zweiten Erstreckungsrichtung zu bewegen.

Die beiden unterschiedlichen Erstreckungsrichtungen erlauben es auch, die wenigstens eine erste und die wenigstens eine zweite Kulissenfläche räumlich dicht beieinander und sogar miteinander überlappend anzuordnen und somit den zur Verfügung stehenden Bauraum gut auszunutzen.

In einer weiteren bevorzugten Variante der Ausführung der Erfindung mit einer zweiten Öffnungseinrichtung weist die wenigstens eine zweite Kulissenfläche eine zweite Offenhaltefläche auf, wobei sich die Kupplungseinrichtung bei einer Kontaktierung der zweiten Offenhaltefläche durch den wenigstens einen zweiten Kulissenfolger im geöffneten Zustand befindet.

Hierdurch können sich die gleichen Vorteile ergeben wie für die erste Offenhaltefläche.

In einer weiteren bevorzugten Variante der Ausführung der Erfindung mit wenigstens einer zweiten Kulissenfläche und wenigstens einem zweiten Kulissenfolger ist der wenigstens eine zweite Kulissenfolger durch eine Bewegung des wenigstens einen zweiten Kulissenfolgers in radialer Richtung der beweglichen Kupplungshälfte, insbesondere durch einen Hebel- oder Schiebermechanismus, mit der zweiten Kulissenfläche in Eingriff und/oder von der zweiten Kulissenfläche außer Eingriff bringbar.

Hierdurch können sich die gleichen Vorteile ergeben wie bei der entsprechenden Funktionsweise des wenigstens einen ersten Kulissenfolgers.

In einer bevorzugten Variante dieser Ausführung der Erfindung wird die Bewegung des wenigstens einen zweiten Kulissenfolgers in radialer Richtung der beweglichen Kupplungshälfte beim Ineingriffbringen mit der wenigstens einen zweiten Kulissenfläche und/oder die Bewegung des wenigstens einen zweiten Kulissenfolgers entlang der zweiten Erstreckungsrichtung wenigstens teilweise durch eine Feder bewirkt, insbesondere durch das Entspannen der Feder.

Hierdurch können sich die gleichen Vorteile ergeben wie bei der entsprechenden Funktionsweise des wenigstens einen ersten Kulissenfolgers.

In einer weiteren bevorzugten Variante der Ausführung der Erfindung mit wenigstens einer zweiten Kulissenfläche und wenigstens einem zweiten Kulissenfolger weist die zweite Öffnungseinrichtung eine Mehrzahl von zweiten Kulissenflächen auf, welche entlang der Umfangsrichtung der beweglichen Kupplungshälfte angeordnet sind.

Hierdurch können sich die gleichen Vorteile ergeben wie durch die entsprechende Mehrzahl von ersten Kulissenflächen.

In einer weiteren bevorzugten Variante der Ausführung der Erfindung mit wenigstens einer zweiten Kulissenfläche und wenigstens einem zweiten Kulissenfolger weist die zweite Öffnungseinrichtung eine Mehrzahl von zweiten Kulissenfolgern auf, welche entlang der Umfangsrichtung der beweglichen Kupplungshälfte angeordnet sind.

Hierdurch können sich die gleichen Vorteile ergeben wie durch die entsprechende Mehrzahl von ersten Kulissenfolgern.

In einer bevorzugten Variante der Ausführung der Erfindung mit wenigstens einer ersten und wenigstens einer zweiten Kulissenfläche sowie mit wenigstens einem ersten und wenigstens einem zweiten Kulissenfolger ist die wenigstens eine erste Kulissenfläche mit der wenigstens einen zweiten Kulissenfläche zumindest teilweise identisch, und/oder der wenigstens eine erste Kulissenfolger ist mit dem wenigstens einen zweiten Kulissenfolger im Wesentlichen identisch.

Falls der wenigstens eine erste Kulissenfolger mit dem wenigstens einen zweiten Kulissenfolger im Wesentlichen identisch ist, ist es bevorzugt, dass dieser Kulissenfolger eine erste und eine zweite Fläche aufweist, wobei die erste Fläche mit einer ersten Kulissenfläche und die zweite Fläche mit einer zweiten Kulissenfläche jeweils ein Keilgetriebe bildet. Dabei weist bevorzugt die erste Fläche in die erste Erstreckungsrichtung und/oder die zweite Fläche in die zweite Erstreckungsrichtung. Alternativ zu einer ersten und einer zweiten Fläche kann es sich auch um einen ersten und einen zweiten Flächenabschnitt einer gemeinsamen, durchgehenden Fläche des Kulissenfolgers handeln.

Wie oben bereits erwähnt, erlauben es die beiden unterschiedlichen Erstreckungsrichtungen der wenigstens einen ersten und der wenigstens einen zweiten Kulissenfläche, die beiden Kulissenflächen räumlich dicht beieinander und sogar miteinander überlappend anzuordnen. Gemäß der vorliegenden Variante können die beiden Kulissenflächen sogar zumindest teilweise identisch sein, d. h. mindestens eine Teilfläche der wenigstens einen ersten Kulissenfläche ist auch eine Teilfläche der wenigstens einen zweiten Kulissenfläche. Vorzugsweise ausgehend von dieser gemeinsamen Teilfläche erstreckt sich die wenigstens eine erste Kulissenfläche dann im Wesentlichen in Umfangsrichtung und die wenigstens eine zweite Kulissenfläche im Wesentlichen in radialer Richtung der beweglichen Kupplungshälfte.

Auf diese Weise ist es möglich, dass je nach dem an der Kupplungseinrichtung anliegenden Betriebsdrehmoment automatisch die erste oder die zweite Öffnungseinrichtung wirksam wird: Bei einem geringen oder gar nicht vorhandenen Betriebsdrehmoment wird der wenigstens eine zweite Kulissenfolger durch die Betätigungseinrichtung entlang der zweiten Erstreckungsrichtung bewegt und dadurch die zweite Öffnungskraft erzeugt. Bei einem größeren Betriebsdrehmoment wäre eine entsprechend größere zweite Öffnungskraft erforderlich, wobei die Betätigungskraft der Betätigungseinrichtung möglicherweise nicht ausreicht, um diese zu erzeugen. Stattdessen bewegt sich der wenigstens eine erste Kulissenfolger (welcher gemäß dieser Variante mit dem wenigstens einen zweiten Kulissenfolger identisch sein kann) aufgrund einer Rotation der beweglichen Kupplungshälfte entlang der ersten Erstreckungsrichtung und erzeugt dadurch aus dem Betriebsdrehmoment die entsprechend größere erste Öffnungskraft.

Durch die teilweise identische Ausbildung der wenigstens einen ersten und der wenigstens einen zweiten Kulissenfläche bzw. durch die Identität des wenigstens einen ersten und des wenigstens einen zweiten Kulissenfolgers können sich weiterhin eine bessere Bauraumausnutzung, eine kompaktere Konstruktion und/oder eine Reduktion der Anzahl der Teile der Kupplungseinrichtung ergeben.

In einer weiteren bevorzugten Variante der zuletzt beschriebenen Ausführung der Erfindung, welche weiterhin eine erste Offenhaltefläche und eine zweite Offenhaltefläche aufweist, ist die erste Offenhaltefläche mit der zweiten Offenhaltefläche im Wesentlichen identisch.

Durch die Identität der ersten und der zweiten Offenhaltefläche können sich insbesondere wieder eine bessere Bauraumausnutzung und eine kompaktere Konstruktion der Kupplungseinrichtung ergeben. Dies ist insbesondere dann der Fall, wenn die erste und die zweite Offenhaltefläche die Form einer ringförmigen Fläche aufweisen, welche sich über den gesamten Umfang der beweglichen Kupplungshälfte erstreckt, da die Offenhaltefläche dann einen relativ großen Bauraum beansprucht, welcher jedoch nur einmal vorgesehen sein muss.

Die Erfindung betrifft weiterhin eine Getriebeschaltung für ein Fahrrad mit wenigstens einer erfindungsgemäßen Kupplungseinrichtung.

Der Einsatz der erfindungsgemäßen Kupplungseinrichtung in einer Getriebeschaltung für ein Fahrrad ermöglicht es, wie eingangs erläutert, die Getriebeschaltung auch unter Last zu schalten. Dies erhöht den Fahrkomfort für den Radfahrer oder die Radfahrerin, da er oder sie beim Schalten den Tretvorgang nicht mehr kurzzeitig unterbrechen oder zumindest die Pedale beim Treten entlasten muss, um den Schaltvorgang durchzuführen. Gerade bei einer Bergauffahrt, insbesondere im Wiegetritt, ist eine solche Unterbrechung oder Entlastung der Pedale nur schwer möglich oder stört zumindest den Tretrhythmus, bringt also den Fahrer oder die Fahrerin "aus dem Tritt" und kann insbesondere im Radsport bei Wettkämpfen wertvolle Zeit kosten. Zusätzlich kann auch eine automatische Schaltung realisiert werden.

Anhand der Zeichnungen sollen Ausführungsbeispiele der Erfindung nachfolgend näher erläutert werden. Es zeigen:
- Fig. 1a: einen Querschnitt einer erfindungsgemäßen Kupplungseinrichtung entlang der Rotationsachse der Kupplungseinrichtung im geschlossenen Zustand;
- Fig. 1b: einen Querschnitt einer erfindungsgemäßen Kupplungseinrichtung entlang der Rotationsachse der Kupplungseinrichtung im geöffneten Zustand;
- Fig. 2: eine perspektivische Ansicht der beweglichen Kupplungshälfte der Kupplungseinrichtung gemäß Fig. 1;
- Fig. 3: eine Aufsicht auf die Kupplungseinrichtung gemäß Fig. 1 in axialer Richtung;
- Fig. 4: eine perspektivische Ansicht der Kupplungseinrichtung gemäß Fig. 1 ohne die bewegliche Kupplungshälfte;
- Fig. 5: einen Querschnitt einer erfindungsgemäßen Kupplungseinrichtung in einem weiteren Ausführungsbeispiel entlang der Rotationsachse der Kupplungseinrichtung im geschlossenen Zustand;
- Fig. 6: eine schematische Schnittdarstellung einer Tretlagerschaltung für ein Fahrrad mit elektrischem Hilfsantrieb und mit vier erfindungsgemäßen Kupplungseinrichtungen.

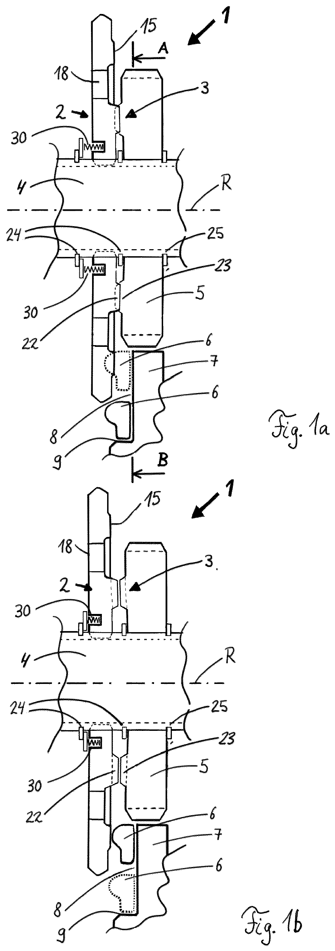

Die Fig. 1 bis 4 zeigen dasselbe Ausführungsbeispiel einer erfindungsgemäßen Kupplungseinrichtung 1 in Form einer axialen Klauenkupplung.

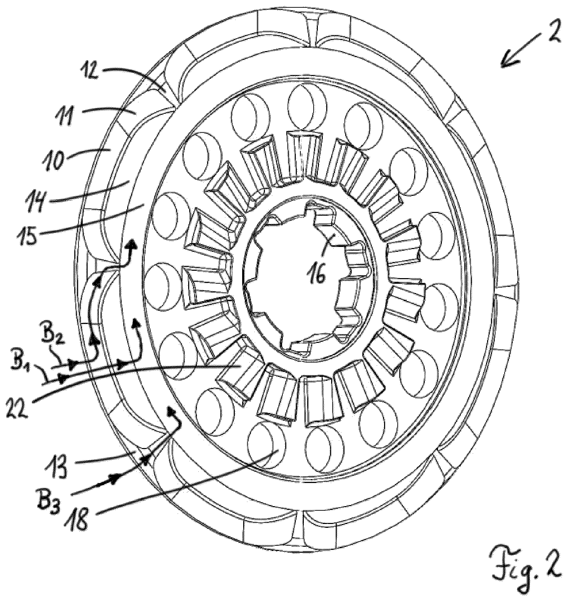

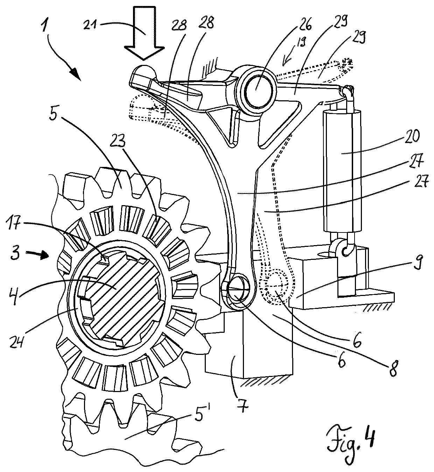

Fig. 1 zeigt einen Querschnitt durch eine erfindungsgemäße Kupplungseinrichtung 1 entlang der Rotationsachse R der Kupplungseinrichtung. Diese weist eine bewegliche Kupplungshälfte 2 auf, welche auf einer Welle 4 mittels einer inneren Steckverzahnung 16 (siehe Fig. 2) in der beweglichen Kupplungshälfte 2 und einer entsprechenden äußeren Steckverzahnung 17 auf der Welle 4 (siehe Fig. 4) axial verschiebbar, aber drehfest gelagert ist. Der axiale Bereich, in dem die bewegliche Kupplungshälfte 2 auf der Welle 4 verschiebbar ist, wird durch zwei Sicherungsringe 24 begrenzt.

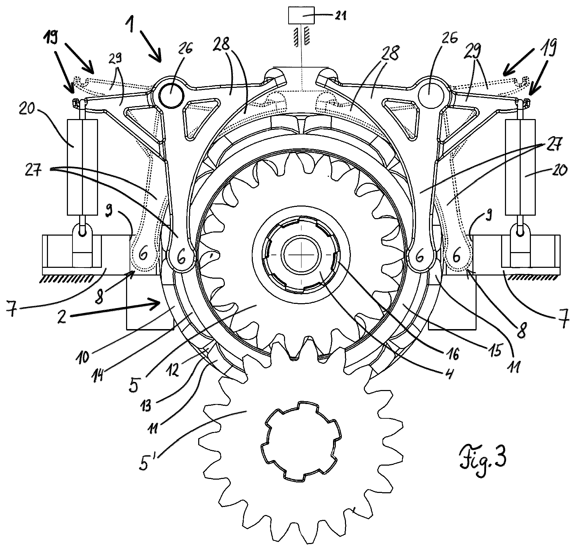

Weiterhin weist die Kupplungseinrichtung 1 eine feste Kupplungshälfte 3 auf, welche drehfest, im Ausführungsbeispiel einstückig, mit einem Zahnrad 5 verbunden ist. Das Zahnrad 5 steht wiederum in kämmendem Eingriff mit einem weiteren Zahnrad 30 (siehe Fig. 3) und bildet einen Teil einer Getriebeschaltung für ein Fahrrad. Die feste Kupplungshälfte 3 ist auf der Welle 4 durch ein Lager, insbesondere ein Gleitlager (nicht dargestellt), frei drehbar gelagert. Eine axiale Bewegung der festen Kupplungshälfte 3 auf der Welle 4 wird durch zwei Sicherungsringe 24, 25 verhindert, wobei der Sicherungsring 24 gleichzeitig die Verschiebbarkeit der beweglichen Kupplungshälfte 2 in Richtung der festen Kupplungshälfte 3 begrenzt.

Die bewegliche Kupplungshälfte 2 wird durch eine Feder 30 gegen die feste Kupplungshälfte 3 gedrückt, sodass die Kupplungseinrichtung 1 im Ruhezustand geschlossen ist.

Die Kupplungseinrichtung 1 ist dafür vorgesehen, ein Drehmoment selektiv von der Welle 4 über die bewegliche Kupplungshälfte 2 auf die feste Kupplungshälfte 3 und damit auf das Zahnrad 5 zu übertragen.

Die Drehmomentübertragung erfolgt durch eine Stirnverzahnung 22 auf der beweglichen Kupplungshälfte 2 (siehe Fig. 2) sowie eine entsprechende Stirnverzahnung 23 auf der festen Kupplungshälfte 3 (siehe Fig. 4). Die Zähne der Stirnverzahnungen 22, 23 fungieren als Klauen, welche durch eine axiale Verschiebung der beweglichen Kupplungshälfte 2 in Richtung der festen Kupplungshälfte 3 axial miteinander in Eingriff gelangen können.

Diejenigen Seitenflächen der Zähne der Stirnverzahnungen 22, 23, die in einer Drehrichtung, welche in dem Getriebe der Antriebsrichtung entspricht, miteinander in Anlage gelangen, sind gerade oder nahezu gerade angeordnet, d. h. sie liegen in einer Radialebene durch die Drehachse der beweglichen Kupplungshälfte 2 bzw. der festen Kupplungshälfte 3, sodass die Drehmomentübertragung orthogonal zu diesen Seitenflächen erfolgt.

Die Seitenflächen der Zähne der Stirnverzahnungen 22, 23, welche in der anderen Drehrichtung, der Nicht-Antriebsrichtung, miteinander in Anlage gelangen, sind gegenüber der genannten Radialebene dagegen stark geneigt, sodass sie bei einer Beaufschlagung der beweglichen Kupplungshälfte 2 mit einem Drehmoment in der Nicht-Antriebsrichtung gegeneinander abrutschen können. Durch die Wirkung des Keilgetriebes, welches diese Seitenflächen der Stirnverzahnungen 22, 23 dabei bilden, wird die bewegliche Kupplungshälfte 2 entgegen der Wirkung der Feder, welche sie gegen die feste Kupplungshälfte 3 drückt, von der festen Kupplungshälfte 3 weg verschoben, sodass in der Nicht-Antriebsrichtung kein Drehmoment übertragen werden kann.

Auf diese Weise wird in der Nicht-Antriebsrichtung eine Freilauffunktion realisiert. Diese kann erforderlich sein, damit bei einem Gangwechsel, bei dem kurzzeitig mehrere Kupplungen gleichzeitig geschlossen sind, das Getriebe nicht blockiert. Auch kann die Freilauffunktion erforderlich sein, um das Getriebe oder Teile davon in der Nicht-Antriebsrichtung von Antriebskomponenten wie beispielsweise einem elektrischen Hilfsmotor zu entkoppeln. Auch kann eine solche Freilauffunktion sicherstellen, dass der Radfahrer oder die Radfahrerin in jeder Fahrsituation die Pedalierbewegung stoppen kann. Dies ist als Sicherheitsfunktion auch bei Störungen im Getriebe oder im elektrischen Hilfsantrieb wichtig.

Radial unmittelbar außerhalb der Stirnverzahnung 22 sind über den Umfang der beweglichen Kupplungshälfte 2 verteilt Durchgangsbohrungen 18 angeordnet, welche den Durchfluss von Öl erlauben und damit eine Schmierung und Kühlung der Kupplungseinrichtung 1 an allen Stellen zwischen der beweglichen Kupplungshälfte 2 und der festen Kupplungshälfte 3 gewährleisten.

Wie in Fig. 1 zu sehen, weist die bewegliche Kupplungshälfte 2 einen größeren Radius als die feste Kupplungshälfte 3 bzw. als das Zahnrad 5 auf, sodass der radial äußere Bereich der beweglichen Kupplungshälfte 2 auf derjenigen axialen Seite, welche der festen Kupplungshälfte 3 zugewandt ist, frei zugänglich ist. In diesem radial äußeren Bereich der beweglichen Kupplungshälfte 2 sind mehrere Kulissenflächen mit jeweiligen Teilstücken 10 bis 14 angeordnet, durch welche in Verbindung mit zugehörigen Kulissenfolgern 6 die Kupplungseinrichtung 1 geöffnet werden kann.

Jeder Kulissenfolger 6 ist in diesem Ausführungsbeispiel als halbkugelförmiges Druckstück realisiert, welches am äußeren Ende eines Hebelarms 27 eines Hebels 19 derart angeordnet ist, dass der Scheitelpunkt der Halbkugel, welcher als Druckpunkt auf die Kulissenfläche dient, auf einer Seite der Ebene, in der der Hebel 19 verschwenkt wird, und von dieser weg gerichtet angeordnet ist. Der Hebel 19 ist um ein Hebellager 26 derart verschwenkbar, dass der Kulissenfolger 6 von radial außen in die Kulissenflächen eingeschwenkt werden kann (siehe Fig. 3 und 4).

Auf der dem Kulissenfolger 6 bezüglich der Ebene, in der der Hebel 19 verschwenkt wird, gegenüberliegenden Seite des Hebelarms 27 liegt dieser an einer Abstützung 7 an, welche ein axiales Ausweichen des Hebelarms 27 und des Kulissenfolgers 6 in Richtung der festen Kupplungshälfte 3 verhindert. Hierzu weist die Abstützung 7 eine Widerlagerfläche 8 für den Kulissenfolger 6 auf, an welcher die dem Kulissenfolger 6 gegenüberliegende Seite des Hebelarms 27 bei der Verschwenkung des Hebels 19 in radialer Richtung entlanggleitet. Die radial äußerste Position des Kulissenfolgers 6, in der der Kulissenfolger 6 vollständig aus dem Bereich der Kulissenfläche der beweglichen Kupplungshälfte 2 herausgeschwenkt ist, wird durch eine Anschlagfläche 9 in der Abstützung 7 festgelegt.

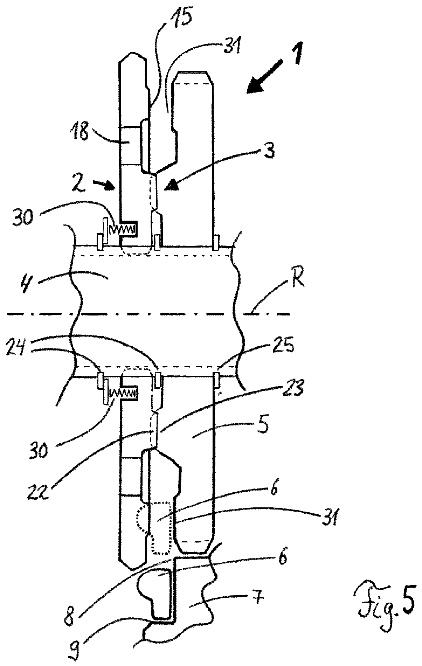

In einem weiteren, hier in Fig. 5 dargestellten Ausführungsbeispiel der erfindungsgemäßen Kupplungseinrichtung kann die Widerlagerfläche für den Kulissenfolger 6 auch an einem rotierenden Bauteil, wie beispielsweise an dem Zahnrad 5, angeordnet sein. Die Kupplungseinrichtung in Fig. 5 entspricht derjenigen in Fig. 1, wobei das Zahnrad 5 einen größeren Durchmesser aufweist. Die rotierende Widerlagerfläche 31 für den Kulissenfolger 6 wird dabei durch eine Seitenfläche des Zahnrades 5 gebildet.

Über den radial äußeren Umfang der beweglichen Kupplungshälfte 2 verteilt sind insgesamt acht identisch gestaltete Kulissenflächen angeordnet, welche in Umfangsrichtung lückenlos aneinander anschließen. Jede Kulissenfläche weist mehrere Teilstücke auf, und zwar
- einen Grundbereich 10, welcher am äußeren radialen Rand der beweglichen Kupplungshälfte 2 in Form einer schmalen Bahn verläuft und in Umfangsrichtung ein konstantes axiales Niveau aufweist,
- ein erstes Umfangsteilstück 11, welches ebenfalls am äußeren radialen Rand der beweglichen Kupplungshälfte 2 in Form einer schmalen Bahn verläuft und sich in Umfangsrichtung an den Grundbereich 10 anschließt, mit einer Krümmung in axialer Richtung in Richtung der festen Kupplungshälfte 3 und gleichzeitig einer geringen Verschwenkung nach radial innen,
- ein zweites Umfangsteilstück 12, welches sich in Form eines kurzen Abschnitts in Umfangsrichtung an das erste Umfangsteilstück 11 anschließt und in axialer Richtung ein konstantes Niveau aufweist,
- ein drittes Umfangsteilstück 13, welches die radial äußere Stirnfläche der beweglichen Kupplungshälfte 2 im Bereich des ersten Umfangsteilstücks 11 und des zweiten Umfangsteilstücks 12 bildet und in Richtung des zweiten Umfangsteilstücks 12 eine geringe Neigung nach radial innen aufweist,
- ein radiales Teilstück 14, welches sich radial innerhalb und seitlich benachbart zum Grundbereich 10 und zum ersten Umfangsteilstück 11 erstreckt und sich an diese anschließt und dabei nach radial innen hin axial in Richtung der festen Kupplungshälfte 3 gekrümmt bzw. gewölbt ist, sodass das radiale Teilstück 14 an seinem radial inneren Rand das gleiche axiale Niveau wie das zweite Umfangsteilstück 12 erreicht.

Radial innerhalb des zweiten Umfangsteilstücks 12 und des radialen Teilstücks 14 der Kulissenfläche schließt sich eine kreisringförmige, über den Umfang der beweglichen Kupplungshälfte 2 durchgehende und geschlossene Offenhaltefläche 15 an, welche überall das gleiche axiale Niveau wie das zweite Umfangsteilstück 12 sowie der radial innere Rand des radialen Teilstücks 14 aufweist.

Aufgrund der oben beschriebenen Geometrie der Kulissenfläche und der Offenhaltefläche 15 ergeben sich für den Kulissenfolger 6, sobald dieser von radial außen in den Bereich der Kulissenfläche eingeschwenkt wird, die folgenden möglichen Bewegungspfade B1 bis B3 (siehe Fig. 2):
Bewegungspfad B1: Wenn an der beweglichen Kupplungshälfte 2 kein oder nur ein geringes Betriebsdrehmoment anliegt und dementsprechend auch nur geringe Reibungskräfte zwischen den Stirnverzahnungen 22, 23 wirken, wird der Kulissenfolger 6 beim Einschwenken von radial außen in den Grundbereich 10 der Kulissenfläche durch den Hebelarm 27 weiter nach radial innen auf das radiale Teilstück 14 gedrückt. Der halbkugelförmig ausgebildete Kulissenfolger 6 und das radiale Teilstück 14 wirken dabei in Form eines Keilgetriebes zusammen. Da der Kulissenfolger 6 aufgrund der Abstützung des Hebelarms 27 an der Widerlagerfläche 8 der Abstützung 7 axial nicht ausweichen kann, wird aufgrund der axialen Krümmung bzw. Wölbung des radialen Teilstücks 14 die gesamte bewegliche Kupplungshälfte 2 in axialer Richtung von der festen Kupplungshälfte 3 weg verschoben. Hierdurch gelangen die Stirnverzahnungen 22, 23 außer Eingriff, und die Kupplungseinrichtung 1 öffnet sich. Der Kulissenfolger 6 wird durch den Hebelarm 27 weiter nach radial innen gedrückt, gelangt schließlich auf die Offenhaltefläche 15 und läuft auf dieser um. Da die Offenhaltefläche 15 in Umfangsrichtung durchgehend ist und ein konstantes axiales Niveau aufweist, kann die Kupplungseinrichtung 1 auf diese Weise prinzipiell beliebig lange offengehalten werden.

Bewegungspfad B2: Wenn an der beweglichen Kupplungshälfte 2 ein nicht nur geringes Betriebsdrehmoment anliegt und dementsprechend größere Reibungskräfte zwischen den Stirnverzahnungen 22, 23 wirken, lässt sich der Kulissenfolger 6 beim Einschwenken von radial außen in den Grundbereich 10 der Kulissenfläche durch den Hebel 19 nicht weiter nach radial innen auf das radiale Teilstück 14 drücken, da die Betätigungskraft des Hebels 19 hierfür nicht ausreicht. Der Kulissenfolger 6 verbleibt somit in dem Grundbereich 10 und wird durch die Rotation der beweglichen Kupplungshälfte 2 auf das erste Umfangsteilstück 11 geleitet. In diesem Fall wirken der halbkugelförmig ausgebildete Kulissenfolger 6 und das erste Umfangsteilstück 11 in Form eines Keilgetriebes zusammen. Aufgrund der axialen Krümmung des ersten Umfangsteilstücks 11 wird die gesamte bewegliche Kupplungshälfte 2 in axialer Richtung von der festen Kupplungshälfte 3 weg verschoben, und die Kupplungseinrichtung 1 öffnet sich. Die dabei erzeugte Öffnungskraft wird durch das Betriebsdrehmoment erzeugt und ist somit entsprechend größer als die Öffnungskraft im Falle des oben beschriebenen Bewegungspfades B1. Die Öffnungskraft ist daher auch ausreichend, um die größeren Reibungskräfte zwischen den Stirnverzahnungen 22, 23 zu überwinden. Der Richtung des ersten Umfangsteilstücks 11 folgend, wird der Kulissenfolger 6 unter der Wirkung des Hebels 19 gleichzeitig leicht nach radial innen verschwenkt. Sodann erreicht der Kulissenfolger 6 das zweite Umfangsteilstück 12, wird durch den Hebel 19 weiter nach radial innen gedrückt und gelangt schließlich auf die Offenhaltefläche 15 mit der oben für den Bewegungspfad B1 beschriebenen Wirkung.

Bewegungspfad B3: Je nach der Drehstellung der beweglichen Kupplungshälfte 2 kann der Kulissenfolger 6 bei seiner Einschwenkung von radial außen statt auf den Grundbereich 10 der Kulissenfläche auch auf das dritte Umfangsteilstück 13 treffen. In diesem Fall wirken der Kulissenfolger 6 und das dritte Umfangsteilstück 13 in Form eines Keilgetriebes zusammen. Der Kulissenfolger 6 wird, sofern an der beweglichen Kupplungshälfte 2 kein oder nur ein geringes Betriebsdrehmoment anliegt, durch den Hebel 19 sofort nach radial innen auf das zweite Umfangsteilstück 12 verschwenkt, und die bewegliche Kupplungshälfte 2 bewegt sich axial von der festen Kupplungshälfte 3 weg. Bei einem größeren anliegenden Betriebsdrehmoment und entsprechend größeren Reibungskräften zwischen den Stirnverzahnungen 22, 23 kann sich der Kulissenfolger 6 nicht allein durch die Betätigungskraft des Hebels 19 auf dem dritten Umfangsteilstück 13 nach radial innen bewegen, sondern muss zunächst "warten", bis er durch die Rotation der beweglichen Kupplungshälfte 2 in den Grundbereich 10 der Kulissenfläche gelangt. Sodann wird er sich, wie oben beschrieben, in Form des Bewegungspfades B2 weiterbewegen.

Somit bewirkt jeder der Bewegungspfade B1, B2 und B3 - abhängig von der Größe des anliegenden Betriebsdrehmoments - eine Öffnung der Kupplungseinrichtung 1.

Aus den jeweiligen Teilstücken 10 bis 14 der Kulissenflächen, auf welchen sich der Kulissenfolger 6 gemäß den Bewegungspfaden B1 bis B3 bewegt, wird weiterhin deutlich, dass die Kupplungseinrichtung 1 im Ausführungsbeispiel zwei Kulissenflächen aufweist: Die erste Kulissenfläche umfasst den Grundbereich 10, das erste Umfangsteilstück 11 und das zweite Umfangsteilstück 12 und erstreckt sich im Wesentlichen in Umfangsrichtung der beweglichen Kupplungshälfte 2. Die zweite Kulissenfläche umfasst den Grundbereich 10 und das radiale Teilstück 14 und erstreckt sich im Wesentlichen in radialer Richtung der beweglichen Kupplungshälfte 2. Die erste und die zweite Kulissenfläche sind somit teilweise identisch, indem sie beide den Grundbereich 10 umfassen.

Die Fig. 3 und 4 zeigen in verschiedenen Darstellungen die Wirkungsweise des Hebels 19. Wie bereits erwähnt, kann der Hebel 19 um ein Hebellager 26 derart verschwenkt werden, dass der am Ende des Hebelarms 27 angeordnete Kulissenfolger 6 von radial außen in die Kulissenfläche der beweglichen Kupplungshälfte 2 hineingeschwenkt bzw. aus dieser herausgeschwenkt wird.

Der Hebel 19 weist zu diesem Zweck zwei orthogonal zum Hebelarm 27 angeordnete Hebelausleger 28, 29 auf. Der innere Hebelausleger 28 kann durch eine Betätigungseinrichtung 21, deren Funktionsweise hier nicht näher beschrieben wird, nach radial innen gedrückt werden, wodurch der Hebelarm 27 sich nach radial außen bewegt. Außerdem wird der äußere Hebelausleger 29 durch eine Zugfeder 20 derart belastet, dass der Hebelarm 27 nach radial innen vorgespannt ist.

Wenn die Betätigungseinrichtung 21 nicht aktiv ist, wird somit der Kulissenfolger 6 stets nach radial innen gedrückt, wodurch, wie oben beschrieben, die Kupplungseinrichtung 1 geöffnet und im geöffneten Zustand gehalten wird. Die Kupplungseinrichtung 1 ist somit im Ruhezustand geöffnet.

Soll die Kupplungseinrichtung 1 geschlossen werden, so wird die Betätigungseinrichtung 21 betätigt, wodurch der innere Hebelausleger 28 nach radial innen und somit der Hebelarm 27 und der Kulissenfolger 6 nach radial außen verschwenkt werden. Aufgrund der Belastung der beweglichen Kupplungshälfte 2 durch die Feder 30 in Richtung der festen Kupplungshälfte 3 bewegt sich die bewegliche Kupplungshälfte 2 dann axial in Richtung der festen Kupplungshälfte 3, die Stirnverzahnungen 22, 23 gelangen in Eingriff und die Kupplungseinrichtung 1 wird geschlossen.

Die Stirnverzahnungen 22, 23 sind bevorzugt als selbsthaltende Klauenkupplungen ausgeführt. Dadurch kann das Betriebsdrehmoment betriebssicher von der Welle 4 auf das Zahnrad 5 übertragen werden. In diesem Zustand, d. h. bei geschlossener Kupplungseinrichtung, steht der Kulissenfolger 6 bevorzugt nicht mit rotierenden Bauteilen in Verbindung.

Fig. 3 zeigt die Kupplungseinrichtung 1 in einer Aufsicht parallel zur Ebene A-B, die in Fig. 1 definiert ist. Die bewegliche Kupplungshälfte 2 befindet sich hinter der festen Kupplungshälfte 3, die nicht sichtbar am Zahnrad 5 angebracht ist. Die bewegliche Kupplungshälfte 2 besitzt eine innere Steckverzahnung 16 und kann hierdurch, bei gleichzeitiger axialer Verschiebbarkeit, Drehmomente auf die äußere Steckverzahnung 17 der Welle 4 (siehe Fig. 4) übertragen. Das Zahnrad 5 ist auf der Welle 4 drehbar gelagert und kämmt mit dem Zahnrad 5'. Bei geschlossener Kupplungseinrichtung 1 geht die bewegliche Kupplungshälfte 2 eine formschlüssige Verbindung mit der am Zahnrad 5 angeordneten festen Kupplungshälfte 3 ein.

Bei geöffneter Kupplungseinrichtung 1 laufen die beiden Kulissenfolger 6 auf der Offenhaltefläche 15 und halten die Kupplungseinrichtung 1 offen. In gestrichelter Darstellung in Fig. 3 befinden sich die Kulissenfolger 6 im ausgeschwenktem Zustand, und die Kupplungseinrichtung 1 kann in diesem Zustand ein Drehmoment übertragen. Die Kulissenfolger 6 befinden sich dabei radial nicht in einem zylindrischen Bereich, der
- den Grundbereich 10 der Kulissenfläche,
- das erste, zweite und dritte Umfangsteilstück 11, 12, 13 der Kulissenfläche,
- das radiale Teilstück 14 der Kulissenfläche
- und die Offenhaltefläche 15
umfasst. Die Flächen 11, 13 und 14 bilden dabei mit dem Kulissenfolger 6 jeweils ein Keilgetriebe in dem oben definierten Sinne.

Durch die Betätigungseinrichtung 21 und über den inneren Hebelausleger 28 des Hebels 19 kann die relative Lage des Kulissenfolgers 6 zu den Kulissenflächen und zur Offenhaltefläche 15 und damit auch zu der jeweils anderen Fläche des Keilgetriebes verändert werden, um eine Zustandsänderung der Kupplungseinrichtung 1 zu bewirken. Die Lageänderung des Kulissenfolgers 6 wird durch eine Feder 20 bewirkt, wobei die Feder 20 am stärksten gespannt ist, wenn sich der Kulissenfolger 6 radial außerhalb der beweglichen Kupplungshälfte 2 befindet, und am schwächsten gespannt ist, wenn sich der Kulissenfolger 6 in Kontakt mit der Offenhaltefläche 15 befindet.

Über eine Widerlagerfläche 8, die sich an einer Abstützung 7 befindet, können die Kräfte, die auf die Kulissenfolger 6 während des Öffnungsvorgangs wirken, in vorteilhafter Ausgestaltung in das Gestell des Getriebes abgeleitet werden.

Die Lageänderung des Kulissenfolgers 6 kann durch unterschiedliche Mechanismen erfolgen. Die beispielhafte Ausführung in Fig. 3 zeigt die radiale Lageänderung des Kulissenfolgers 6, der mit dem Hebelarm 27 des Hebels 19 fest verbunden ist. Ein Ende der Zugfeder 20 ist gestellfest verbunden, und das andere Ende der Zugfeder 20 ist an dem äußeren Hebelausleger 29 befestigt und bewirkt, dass der Kulissenfolger 6 bei nicht betätigter Betätigungseinrichtung 21 immer radial nach innen in Richtung der Offenhaltefläche 15 geschwenkt wird. Auf diese Weise wird die in der Feder 20 gespeicherte Energie dazu verwendet, den Kulissenfolger 6 radial über die Flächen des Keilgetriebes gleiten zu lassen.

Die Bewegung des Kulissenfolgers 6 über die Keilgetriebeflächen in Umfangsrichtung wird dagegen durch die Rotation der Welle 4 und der beweglichen Kupplungshälfte 2 hervorgerufen. Die Orientierung der Neigungen und Krümmungen der Keilgetriebeflächen im Raum sind so gewählt, dass zum Öffnen der Kupplungseinrichtung 1 Teile der über die Kupplungseinrichtung 1 bzw. über das Getriebe übertragenen mechanischen Arbeit zur Hilfe genommen werden.

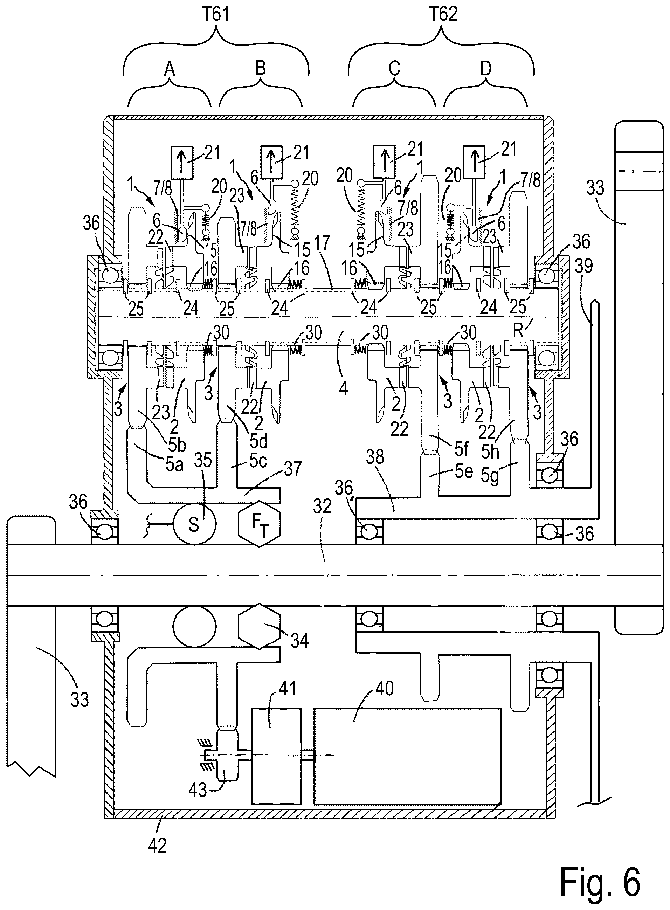

Fig. 6 zeigt eine schematische Schnittdarstellung einer Tretlagerschaltung mit elektrischem Hilfsantrieb 40 und mit vier Kupplungseinrichtungen 1 gemäß der vorliegenden Erfindung.

Die menschliche Tretleistung wird über die Pedalarme 33 in die Tretlagerwelle 32 eingeleitet. Die Ausgangshohlwelle 38 ist im Gehäuse 42 über Kugellager 36 gelagert. Eine Eingangshohlwelle 37 ist mit zwei Zahnradpaaren 5a, 5b und 5c, 5d ausgestattet und verläuft koaxial zur Tretlagerwelle 32. Das Drehmoment des Radfahrers oder der Radfahrerin wird von der Tretlagerwelle 32 über einen Freilauf 34 in die Eingangshohlwelle 37 eingeleitet. Ein Sensor 35 ist zwischen der Tretlagerwelle 32 und der Eingangshohlwelle 37 angeordnet und nimmt die für die Motorregelung relevanten Werte wie zum Beispiel Drehzahl, Drehmoment und Drehwinkel auf. Der schematisch dargestellte elektrische Hilfsantrieb 40 treibt über ein Getriebe 41 das Einkoppelzahnrad 43 an. Von der Eingangshohlwelle 37 wird das Drehmoment über die Zahnräder 5a und 5c sowie die zugehörigen Zahnräder 5b, 5d und von dort selektiv über eine erfindungsgemäße Kupplungseinrichtung 1 auf die Welle 4 weitergeleitet.

In der beispielhaften Ausgestaltung gemäß Fig. 6 bilden zwei Getriebestufen A und B gemeinsam ein erstes Teilgetriebe TG1 mit zwei Gangstufen. In dem ersten Teilgetriebe TG1 befinden sich zwei Kupplungseinrichtungen 1 gemäß der Erfindung.

Wenn vorliegend von einem Teilgetriebe die Rede ist, so ist eine Unterbaugruppe innerhalb eines Schaltgetriebes gemeint, welche mindestens zwei unterschiedliche Getriebeübersetzungen bereitzustellt. Ein Teilgetriebe kann als schaltbares Stirnradgetriebe, schaltbares Planetengetriebe oder als ein anderes Getriebe ausgeführt sein.

Ein zweites Teilgetriebe TG2 mit dem Getriebestufen C und D befindet sich in der Darstellung rechts ebenfalls auf der Welle 4 und überträgt das Drehmoment von der Welle 4 über weitere Zahnradpaare 5e, 5f und 5g, 5h auf die Ausgangshohlwelle 38.

Die Ausgangshohlwelle 38 ist über Kugellager 36 am Gehäuse 42 und auf der Tretlagerwelle 32 gelagert und verläuft koaxial zur Tretlagerwelle 32. Die Ausgangshohlwelle 38 übergibt das Drehmoment auf das Abtriebsritzel 39, welches über ein Zugmittel (nicht dargestellt), beispielsweise eine Kette oder einen Riemen, das angetriebene Rad des Fahrzeugs antreibt.

Die Getriebestufen A, B, C, D sind hier als Stirnradgetriebe ausgeführt. In dieser beispielhaften Ausführung besitzt das erste Teilgetriebe TG1 zwei Gänge und das zweite Teilgetriebe TG2 ebenfalls zwei Gänge. Da die beiden Teilgetriebe TG1, TG2 in Reihe geschaltet sind, ergibt sich die Gesamtzahl der Gänge zu 2 x 2 = 4 Gangstufen.

Weitere beispielhafte, hier nicht dargestellte Ausführungen von Schaltgetrieben mit der erfindungsgemäßen Kupplungseinrichtung verfügen über mehr als zwei Gangstufen in jedem Teilgetriebe. Falls das erste Teilgetriebe beispielsweise über vier Gangstufen und das zweite Teilgetriebe über drei Gangstufen verfügt, so wäre die Gesamtzahl der möglichen Gänge zwölf.

In Fig. 6 sind die Zahnräder 5b, 5d, 5f und 5h als Losräder auf der Welle 4 gelagert und über Sicherungsringe 25, hier Seegerringe, axial festgelegt. Sie bilden mit der jeweiligen Stirnverzahnung 23 die festen Kupplungshälften 3. Die beweglichen Kupplungshälften 2 sind über innere und äußere Steckverzahnungen 16, 17 mit der Welle 4 verbunden und können so ein Drehmoment übertragen. Trotzdem sind die Kupplungshälften 2 axial verschiebbar auf der Welle 4 angeordnet und besitzen wiederum Sicherungsringe 24, hier ebenfalls Seegerringe, und teilweise auch die Sicherungsringe 25 als axiale Anschläge. Die Druckfedern 30 sind so angeordnet, dass die beweglichen Kupplungshälften 2 ständig in Richtung der festen Kupplungshälften 3 gedrückt werden. Wenn die beweglichen Kupplungshälften 2 nicht mit dem jeweiligen Kulissenfolger 6 in Verbindung stehen, werden sie somit geschlossen und sind aktiviert. Die Kupplungseinrichtungen 1 der Getriebestufen B und C sind in Fig. 6 geschlossen dargestellt. Der jeweilige Kulissenfolger 6 befindet sich durch die jeweilige Betätigungseinrichtung 21 sehr weit radial nach außen gezogen und steht nicht in Verbindung mit den jeweiligen Kulissenflächen. Die jeweilige Zugfeder 20 ist gespannt.

Die Getriebestufen A und D befinden sich dagegen in einem deaktivierten, geöffneten Zustand. Der jeweilige Kulissenfolger 6 steht mit der jeweilige Offenhaltefläche 15 in Verbindung. Die jeweilige Feder 30 kann die jeweilige Kupplungseinrichtung 1 nicht schließen, da sich die jeweilige bewegliche Kupplungshälfte 2 über den jeweiligen Kulissenfolger 6 und über die jeweilige Widerlagerfläche 8 am Gehäuse 42 abstützt.

Man erkennt in Fig. 6, dass sich eine vorteilhafte Ausgestaltung innerhalb einer Getriebeschaltung ergibt, wenn sich in jedem Teilgetriebe TG1, TG2 mindestens zwei Kupplungseinrichtungen 1 befinden.

Eine große Anzahl an Gangstufen kann erreicht werden, wenn mindestens zwei Teilgetriebe TG1, TG2 in Reihe geschaltet sind, wobei jedes Teilgetriebe TG1, TG2 mindestens zwei erfindungsgemäße Kupplungseinrichtungen 1 enthält.

Eine besonders leichte und platzsparende Konstruktion ergibt sich, wenn mindestens zwei Teilgetriebe TG1, TG2 mit den erfindungsgemäßen Kupplungseinrichtungen 1 koaxial zueinander angeordnet sind.

Somit sind bevorzugt zwei und weiter bevorzugt vier oder mehr als vier Kupplungseinrichtungen 1 koaxial zueinander angeordnet.

Der Schaltvorgang von einer Gangstufe in eine andere Gangstufe ist insbesondere dann sehr sicher und ohne Leerlauf ausführbar, wenn der Einkuppelvorgang einer ersten Kupplungseinrichtung 1 zeitlich vor dem Auskuppelvorgang einer zweiten Kupplungseinrichtung 1 innerhalb desselben Teilgetriebes TG1, TG2 ausgeführt wird.

Der Schaltvorgang von einer Gangstufe in eine andere Gangstufe ist somit insbesondere dann sehr sicher und ohne Leerlauf ausführbar, wenn es während des Schaltvorgangs einen Zeitpunkt oder Zeitraum gibt, an bzw. in dem die beweglichen Kupplungshälften 2 mit den festen Kupplungshälften 3 von zwei Kupplungseinrichtungen 1 jeweils miteinander in Eingriff sind.

Das Deaktivieren einer Kupplungseinrichtung 1 ist besonders einfach, ohne Störungen und ohne einen hohen Energie- und Steuerungsaufwand innerhalb der Betätigungseinrichtung 21 möglich, wenn der Kulissenfolger 6 relativ zu den Kulissenflächen 10-14 und/oder zu der Offenhaltefläche 15 mit Hilfe einer Feder 20 bewegt wird. Wenn an dieser Stelle von Deaktivieren die Rede ist, so ist der Vorgang gemeint, der dazu führt, dass die Kupplungseinrichtung 1 in einen Zustand gebracht wird, in dem sie kein Drehmoment übertragen kann, also das Öffnen der Kupplung.

### Bezugszeichenliste

- 1: Kupplungseinrichtung
- 2: Bewegliche Kupplungshälfte
- 3: Feste Kupplungshälfte
- 4: Welle
- 5, 5': Zahnrad
- 5a-h: Zahnrad
- 6: Kulissenfolger
- 7: Abstützung
- 8: Widerlagerfläche für Kulissenfolger
- 9: Anschlagfläche für Kulissenfolger
- 10: Grundbereich der Kulissenfläche
- 11: Erstes Umfangsteilstück der Kulissenfläche
- 12: Zweites Umfangsteilstück der Kulissenfläche
- 13: Drittes Umfangsteilstück der Kulissenfläche
- 14: Radiales Teilstück der Kulissenfläche
- 15: Offenhaltefläche
- 16: Innere Steckverzahnung
- 17: Äußere Steckverzahnung
- 18: Durchgangsbohrung
- 19: Hebel
- 20: Zugfeder
- 21: Betätigungseinrichtung
- 22: Stirnverzahnung auf der beweglichen Kupplungshälfte
- 23: Stirnverzahnung auf der festen Kupplungshälfte
- 24, 25: Sicherungsring
- 26: Hebellager
- 27: Hebelarm
- 28: Innerer Hebelausleger
- 29: Äußerer Hebelausleger
- 30: Feder, Druckfeder
- 31: Rotierende Widerlagerfläche für Kulissenfolger
- 32: Tretlagerwelle
- 33: Pedalarm
- 34: Tretlagerfreilauf
- 35: Sensor
- 36: Kugellager
- 37: Eingangshohlwelle
- 38: Ausgangshohlwelle
- 39: Abtriebsritzel
- 40: Elektrischer Hilfsantrieb
- 41: Getriebe
- 42: Gehäuse
- 43: Einkoppelzahnrad

- R: Rotationsachse
- B1-B3: Bewegungspfad
- A: Erste Getriebeübersetzung
- B: Zweite Getriebeübersetzung
- C: Dritte Getriebeübersetzung
- D: Vierte Getriebeübersetzung
- TG1: Erstes Teilgetriebe
- TG2: Zweites Teilgetriebe

## Patentansprüche

1. Kupplungseinrichtung (1) zur selektiven Übertragung eines Drehmoments von einer ersten Welle oder Nabe (4) auf eine zweite Welle oder Nabe (5), insbesondere für eine Getriebeschaltung für ein Fahrrad, aufweisend
- eine erste Kupplungshälfte (2), welche mit der ersten Welle oder Nabe (4) drehfest verbunden ist,
- eine zweite Kupplungshälfte (3), welche mit der zweiten Welle oder Nabe (5) drehfest verbunden ist,
- eine erste Öffnungseinrichtung (6-12, 15), welche dazu eingerichtet ist, aus einem Betriebsdrehmoment, mit welchem die erste Kupplungshälfte (2), insbesondere durch einen Betrieb eines Fahrrades mit einer Getriebeschaltung, welche die Kupplungseinrichtung (1) enthält, beaufschlagt ist, eine erste Öffnungskraft zu erzeugen, durch welche die Kupplungseinrichtung (1) von einem geschlossenen Zustand, in welchem ein Drehmoment von der ersten Kupplungshälfte (2) auf die zweite Kupplungshälfte (3) übertragbar ist, in einen geöffneten Zustand, in welchem kein Drehmoment von der ersten Kupplungshälfte (2) auf die zweite Kupplungshälfte (3) übertragbar ist, bringbar ist, und
- eine Betätigungseinrichtung (21), welche zur Steuerung der ersten Öffnungseinrichtung (6-12, 15) eingerichtet ist,
wobei die erste Öffnungseinrichtung (6-12, 15) räumlich getrennt von dem Drehmomentübertragungsbereich (22-23) der Kupplungseinrichtung (1), d. h. von demjenigen räumlichen Bereich, an dem im geschlossenen Zustand der Kupplungseinrichtung (1) eine Drehmomentübertragung von der ersten Kupplungshälfte (2) auf die zweite Kupplungshälfte (3) erfolgen kann, angeordnet ist,
**gekennzeichnet durch** eine zweite Öffnungseinrichtung (6-10, 12-15),
welche dazu eingerichtet ist, ohne Verwendung des Betriebsdrehmoments eine zweite Öffnungskraft zu erzeugen, durch welche die Kupplungseinrichtung (1) von dem geschlossenen Zustand in den geöffneten Zustand bringbar ist, wobei die Betätigungseinrichtung (21) zur Steuerung der zweiten Öffnungseinrichtung (6-10, 12-15) eingerichtet ist und wobei ein Betriebsdrehmoment, bei dem die zweite Öffnungseinrichtung (6-10, 12-15) wirksam ist, kleiner ist als ein Betriebsdrehmoment, bei dem die erste Öffnungseinrichtung (6-12, 15) wirksam ist.

2. Kupplungseinrichtung (1) gemäß Anspruch 1, **dadurch gekennzeichnet, dass** die erste Öffnungseinrichtung (6-12, 15) radial weiter außen als der Drehmomentübertragungsbereich (22-23) angeordnet ist.

3. Kupplungseinrichtung (1) gemäß einem der vorhergehenden Ansprüche, **dadurch gekennzeichnet, dass** eine bewegliche Kupplungshälfte (2), welche eine der ersten Kupplungshälfte (2) und der zweiten Kupplungshälfte (3) ist, in axialer Richtung der ersten Welle oder Nabe (4) bzw. der zweiten Welle oder Nabe (5) beweglich ist und dass die erste Öffnungseinrichtung (6-12, 15) aufweist:
- wenigstens eine an der beweglichen Kupplungshälfte (2) angeordnete erste Kulissenfläche (10-12), die sich in einer ersten Erstreckungsrichtung im Wesentlichen in Umfangsrichtung der beweglichen Kupplungshälfte (2) erstreckt und die eine derartige erste Krümmung aufweist, dass sich eine Position in axialer Richtung eines Punktes auf der ersten Kulissenfläche (10-12) entlang der ersten Erstreckungsrichtung ändert, und
- wenigstens einen ersten Kulissenfolger (6), der dazu eingerichtet ist, bei einer Rotation der beweglichen Kupplungshälfte (2) die erste Kulissenfläche (10-12) entlang der ersten Erstreckungsrichtung zu kontaktieren, dadurch die erste Öffnungskraft zu erzeugen und dadurch eine Bewegung der beweglichen Kupplungshälfte (2) in axialer Richtung zu bewirken, wodurch die Kupplungseinrichtung (1) von dem geschlossenen Zustand in den geöffneten Zustand gebracht wird,
wobei die Betätigungseinrichtung (21) dazu eingerichtet ist, den wenigstens einen ersten Kulissenfolger (6) mit der ersten Kulissenfläche (10-12) in Eingriff und von der ersten Kulissenfläche (10-12) außer Eingriff zu bringen.

4. Kupplungseinrichtung (1) gemäß Anspruch 3, **dadurch gekennzeichnet, dass** wenigstens eine erste Kulissenfläche (11) und der wenigstens eine erste Kulissenfolger (6) zusammen ein Keilgetriebe bilden.

5. Kupplungseinrichtung (1) gemäß einem der Ansprüche 3 bis 4, **dadurch gekennzeichnet, dass** die erste Öffnungseinrichtung (6-12, 15) weiterhin eine erste Offenhaltefläche (15) aufweist, welche derart an der beweglichen Kupplungshälfte (2) angeordnet ist, dass sich die Kupplungseinrichtung (1) bei einer Kontaktierung der ersten Offenhaltefläche (15) durch den wenigstens einen ersten Kulissenfolger (6) im geöffneten Zustand befindet, wobei die erste Offenhaltefläche (15) angrenzend an einen Bereich der ersten Kulissenfläche (10-12) angeordnet ist, bei dessen Kontaktierung durch den wenigstens einen ersten Kulissenfolger (6) sich die Kupplungseinrichtung (1) im geöffneten Zustand befindet.

6. Kupplungseinrichtung (1) gemäß einem der Ansprüche 3 bis 5, **dadurch gekennzeichnet, dass** der wenigstens eine erste Kulissenfolger (6) durch eine Bewegung des wenigstens einen ersten Kulissenfolgers (6) in radialer Richtung der beweglichen Kupplungshälfte (2), insbesondere durch einen Hebel- oder Schiebermechanismus (19), mit der wenigstens einen ersten Kulissenfläche (10-12) in Eingriff und/oder von der wenigstens einen ersten Kulissenfläche (10-12) außer Eingriff bringbar ist.

7. Kupplungseinrichtung (1) gemäß Anspruch 6, **dadurch gekennzeichnet, dass** die Bewegung des wenigstens einen ersten Kulissenfolgers (6) in radialer Richtung der beweglichen Kupplungshälfte (2) beim Ineingriffbringen mit der wenigstens einen ersten Kulissenfläche (10-12) wenigstens teilweise durch eine Feder (20) bewirkt wird, insbesondere durch das Entspannen der Feder (20).

8. Kupplungseinrichtung (1) gemäß einem der Ansprüche 3 bis 7, **dadurch gekennzeichnet, dass** die erste Öffnungseinrichtung (6-12, 15) eine Mehrzahl von ersten Kulissenflächen (10-12) aufweist, welche entlang der Umfangsrichtung der beweglichen Kupplungshälfte (2) angeordnet sind.

9. Kupplungseinrichtung (1) gemäß einem der Ansprüche 3 bis 8, **dadurch gekennzeichnet, dass** die erste Öffnungseinrichtung (6-12, 15) eine Mehrzahl von ersten Kulissenfolgern (6) aufweist, welche entlang der Umfangsrichtung der beweglichen Kupplungshälfte (2) angeordnet sind.

10. Kupplungseinrichtung (1) gemäß einem der vorhergehenden Ansprüche, **dadurch gekennzeichnet, dass** die zweite Öffnungseinrichtung (6-10, 12-15) radial weiter außen als der Drehmomentübertragungsbereich (22-23) angeordnet ist.

11. Kupplungseinrichtung (1) gemäß einem der vorhergehenden Ansprüche, **dadurch gekennzeichnet, dass** die zweite Öffnungseinrichtung (6-10, 12-15) aufweist:
- wenigstens eine an der beweglichen Kupplungshälfte (2) angeordnete zweite Kulissenfläche (10, 12-15), die sich in einer zweiten Erstreckungsrichtung im Wesentlichen in radialer Richtung der beweglichen Kupplungshälfte (2) erstreckt und die eine derartige zweite Krümmung aufweist, dass sich eine Position in axialer Richtung eines Punktes auf der wenigstens einen zweiten Kulissenfläche (10, 12-15) entlang der zweiten Erstreckungsrichtung ändert, und
- wenigstens einen zweiten Kulissenfolger (6), der dazu eingerichtet ist, die wenigstens eine zweite Kulissenfläche (10, 12-15) entlang der zweiten Erstreckungsrichtung zu kontaktieren, dadurch die zweite Öffnungskraft zu erzeugen und dadurch eine Bewegung der beweglichen Kupplungshälfte (2) in axialer Richtung zu bewirken, wodurch die Kupplungseinrichtung (1) von dem geschlossenen Zustand in den geöffneten Zustand gebracht wird,
wobei die Betätigungseinrichtung (21) dazu eingerichtet ist, den wenigstens einen zweiten Kulissenfolger (6) mit der wenigstens einen zweiten Kulissenfläche (10, 12-15) in Eingriff zu bringen, entlang der zweiten Erstreckungsrichtung zu bewegen und von der zweiten Kulissenfläche (10, 12-15) außer Eingriff zu bringen.

12. Kupplungseinrichtung (1) gemäß Anspruch 11, **dadurch gekennzeichnet, dass** wenigstens eine zweite Kulissenfläche (14) und der wenigstens eine zweite Kulissenfolger (6) zusammen ein Keilgetriebe bilden.

13. Kupplungseinrichtung (1) gemäß einem der Ansprüche 11 bis 12, **dadurch gekennzeichnet, dass** die wenigstens eine zweite Kulissenfläche (10, 12-15) eine zweite Offenhaltefläche (15) aufweist, wobei sich die Kupplungseinrichtung (1) bei einer Kontaktierung der zweiten Offenhaltefläche (15) durch den wenigstens einen zweiten Kulissenfolger (6) im geöffneten Zustand befindet.

14. Kupplungseinrichtung (1) gemäß einem der Ansprüche 11 bis 13, **dadurch gekennzeichnet, dass** der wenigstens eine zweite Kulissenfolger (6) durch eine Bewegung des wenigstens einen zweiten Kulissenfolgers (6) in radialer Richtung der beweglichen Kupplungshälfte (2), insbesondere durch einen Hebel- oder Schiebermechanismus (19), mit der zweiten Kulissenfläche (10, 12-15) in Eingriff und/oder von der zweiten Kulissenfläche (10, 12-15) außer Eingriff bringbar ist.

15. Kupplungseinrichtung (1) gemäß Anspruch 14, **dadurch gekennzeichnet, dass** die Bewegung des wenigstens einen zweiten Kulissenfolgers (6) in radialer Richtung der beweglichen Kupplungshälfte (2) beim Ineingriffbringen mit der zweiten Kulissenfläche (10, 12-15) und/oder die Bewegung des wenigstens einen zweiten Kulissenfolgers (6) entlang der zweiten Erstreckungsrichtung wenigstens teilweise durch eine Feder (20) bewirkt wird, insbesondere durch das Entspannen der Feder (20).

16. Kupplungseinrichtung (1) gemäß mindestens einem der Ansprüche 11 bis 15, **dadurch gekennzeichnet, dass** die zweite Öffnungseinrichtung (6-10, 12-15) eine Mehrzahl von zweiten Kulissenflächen (10, 12-15) aufweist, welche entlang der Umfangsrichtung der beweglichen Kupplungshälfte (2) angeordnet sind.

17. Kupplungseinrichtung (1) gemäß mindestens einem der Ansprüche 11 bis 16, **dadurch gekennzeichnet, dass** die zweite Öffnungseinrichtung (6-10, 12-15) eine Mehrzahl von zweiten Kulissenfolgern (6) aufweist, welche entlang der Umfangsrichtung der beweglichen Kupplungshälfte (2) angeordnet sind.

18. Kupplungseinrichtung (1) gemäß einem der Ansprüche 3 bis 9 und einem der Ansprüche 11 bis 17, **dadurch gekennzeichnet, dass** die wenigstens eine erste Kulissenfläche (10-12) mit der wenigstens einen zweiten Kulissenfläche (10, 12-15) zumindest teilweise identisch ist und/oder dass der wenigstens eine erste Kulissenfolger (6) mit dem wenigstens einen zweiten Kulissenfolger (6) im Wesentlichen identisch ist.

19. Kupplungseinrichtung (1) gemäß den Ansprüchen 5, 13 und 18, **dadurch gekennzeichnet, dass** die erste Offenhaltefläche (15) mit der zweiten Offenhaltefläche (15) im Wesentlichen identisch ist.

20. Getriebeschaltung für ein Fahrrad mit wenigstens einer Kupplungseinrichtung (1) gemäß einem der vorhergehenden Ansprüche.

## Claims

1. A clutch device (1) for selective transmission of a torque from a first shaft or hub (4) to a second shaft or hub (5), in particular for a gear-shifting system for a bicycle, having
- a first clutch half (2) connected to the first shaft or hub (4) in a rotationally fixed manner,
- a second clutch half (3) connected to the second shaft or hub (5) in a rotationally fixed manner,
- a first opening device (6-12, 15) adapted to generate, from an operating torque with which the first clutch half (2) is supplied, in particular by means of an operation of a bicycle with a gear-shifting system containing the clutch device (1), a first opening force by means of which the clutch device (1) is transitionable from a closed state, in which a torque is transmittable from the first clutch half (2) to the second clutch half (3), to an opened state, in which no torque is transmittable from the first clutch half (2) to the second clutch half (3), and
- an actuating device (21) adapted for controlling the first opening device (6-12, 15),
wherein the first opening device (6-12, 15) is arranged spatially separated from the torque transmission region (22-23) of the clutch device (1), i.e., from that spatial region at which, in the closed state of the clutch device (1), a torque transmission from the first clutch half (2) to the second clutch half (3) may take place,
**characterized by** a second opening device (6-10, 12-15) adapted to generate, without use of the operating torque, a second opening force by means of which the clutch device (1) is transitionable from the closed state to the opened state, wherein the actuating device (21) is adapted for controlling the second opening device (6-10, 12-15), and wherein an operating torque at which the second opening device (6-10, 12-15) is effective is less than an operating torque at which the first opening device (6-12, 15) is effective.

2. The clutch device (1) according to claim 1, **characterized in that** the first opening device (6-12, 15) is arranged radially further outwards than the torque transmission region (22-23).

3. The clutch device (1) according to any one of the preceding claims, **characterized in that** a movable clutch half (2) which is one of the first clutch half (2) and the second clutch half (3) is movable in an axial direction of the first shaft or hub (4) or the second shaft or hub (5), respectively, and **in that** the first opening device (6-12, 15) has:
- at least one first link surface (10-12) arranged on the movable clutch half (2), extending in a first direction of extension substantially in a circumferential direction of the movable clutch half (2) and having such a first curvature that a position changes in an axial direction of a point on the first link surface (10-12) along the first direction of extension, and
- at least one first link follower (6) adapted to contact the first link surface (10-12) along the first direction of extension upon rotation of the movable clutch half (2), thereby to generate the first opening force and thereby to effect a movement of the movable clutch half (2) in the axial direction, whereby the clutch device (1) is transitioned from the closed state to the opened state,
wherein the actuating device (21) is adapted to engage the at least one first link follower (6) with the first link surface (10-12) and to disengage it from the first link surface (10-12).

4. The clutch device (1) according to claim 3, **characterized in that** at least one first link surface (11) and the at least one first link follower (6) together form a wedge gear set.

5. The clutch device (1) according to any one of claims 3 to 4, **characterized in that** the first opening device (6-12, 15) furthermore has a first hold-open surface (15) arranged on the movable clutch half (2) such that the clutch device (1) is in the opened state upon contacting the first hold-open surface (15) by the at least one first link follower (6), wherein the first hold-open surface (15) is arranged adjacent to a region of the first link surface (10-12) upon contacting of which by the at least one first link follower (6) the clutch device (1) is in the opened state.

6. The clutch device (1) according to any one of claims 3 to 5, **characterized in that** the at least one first link follower (6), by means of a movement of the at least one first link follower (6) in the radial direction of the movable clutch half (2), in particular by a lever or slider mechanism (19), is engageable with the at least one first link surface (10-12) and/or disengageable from the at least one first link surface (10-12).

7. The clutch device (1) according to claim 6, **characterized in that** the movement of the at least one first link follower (6) in the radial direction of the movable clutch half (2) upon engaging the at least one first link surface (10-12) is at least partially effected by a spring (20), in particular by releasing the spring (20).

8. The clutch device (1) according to any one of claims 3 to 7, **characterized in that** the first opening device (6-12, 15) has a plurality of first link surfaces (10-12) arranged along the circumferential direction of the movable clutch half (2).

9. The clutch device (1) according to any one of claims 3 to 8, **characterized in that** the first opening device (6-12, 15) has a plurality of first link followers (6) arranged along the circumferential direction of the movable clutch half (2).

10. The clutch device (1) according to any one of the preceding claims, **characterized in that** the second opening device (6-10, 12-15) is arranged radially further outwards than the torque transmission region (22-23).

11. The clutch device (1) according to any one of the preceding claims, **characterized in that** the second opening device (6-10, 12-15) has:
- at least one second link surface (10, 12-15) arranged on the movable clutch half (2), extending in a second direction of extension substantially in a radial direction of the movable clutch half (2) and having such a second curvature that a position changes in an axial direction of a point on the at least one second link surface (10, 12-15) along the second direction of extension, and
- at least one second link follower (6) adapted to contact the at least one second link surface (10, 12-15) along the second direction of extension, thereby to generate the second opening force and thereby to effect a movement of the movable clutch half (2) in the axial direction, whereby the clutch device (1) is transitioned from the closed state to the opened state,
wherein the actuating device (21) is adapted to engage the at least one second link follower (6) with the at least one second link surface (10, 12-15), to move it along the second direction of extension and to disengage it from the second link surface (10, 12-15).

12. The clutch device (1) according to claim 11, **characterized in that** at least one second link surface (14) and the at least one second link follower (6) together form a wedge gear set.

13. The clutch device (1) according to any one of claims 11 to 12, **characterized in that** the at least one second link surface (10, 12-15) has a second hold-open surface (15), wherein the clutch device (1) is in the opened state upon contacting the second hold-open surface (15) by the at least one second link follower (6).

14. The clutch device (1) according to any one of claims 11 to 13, **characterized in that** the at least one second link follower (6), by means of a movement of the at least one second link follower (6) in the radial direction of the movable clutch half (2), in particular by a lever or slider mechanism (19), is engageable with the second link surface (10, 12-15) and/or disengageable from the second link surface (10, 12-15).

15. The clutch device (1) according to claim 14, **characterized in that** the movement of the at least one second link follower (6) in the radial direction of the movable clutch half (2) upon engaging the second link surface (10, 12-15) and/or the movement of the at least one second link follower (6) along the second direction of extension is at least partially effected by a spring (20), in particular by releasing the spring (20).

16. The clutch device (1) according to at least one of claims 11 to 15, **characterized in that** the second opening device (6-10, 12-15) has a plurality of second link surfaces (10, 12-15) arranged along the circumferential direction of the movable clutch half (2).

17. The clutch device (1) according to at least one of claims 11 to 16, **characterized in that** the second opening device (6-10, 12-15) has a plurality of second link followers (6) arranged along the circumferential direction of the movable clutch half (2).

18. The clutch device (1) according to any one of claims 3 to 9 and any one of claims 11 to 17, **characterized in that** the at least one first link surface (10-12) is at least partially identical to the at least one second link surface (10, 12-15), and/or **in that** the at least one first link follower (6) is substantially identical to the at least one second link follower (6).

19. The clutch device (1) according to claims 5, 13 and 18, **characterized in that** the first hold-open surface (15) is substantially identical to the second hold-open surface (15).

20. A gear-shifting system for a bicycle with at least one clutch device (1) according to any one of the preceding claims.

## Revendications

1. Dispositif d'accouplement (1) pour la transmission sélective d'un couple d'un premier arbre ou moyeu (4) à un deuxième arbre ou moyeu (5), en particulier pour une commande de changement de vitesse pour une bicyclette, comprenant
- un premier demi-accouplement (2), lequel est relié de manière solidaire en rotation au premier arbre ou moyeu (4),
- un deuxième demi-accouplement (3), lequel est relié de manière solidaire en rotation au deuxième arbre ou moyeu (5),
- un premier dispositif d'ouverture (6-12, 15), lequel est conçu pour, à partir d'un couple de fonctionnement avec lequel le premier demi-accouplement (2) est sollicité, en particulier par un fonctionnement d'une bicyclette avec une commande de changement de vitesse, laquelle comporte le dispositif d'accouplement (1), produire une première force d'ouverture par laquelle le dispositif d'accouplement (1) peut être amené d'un état fermé, dans lequel un couple peut être transmis du premier demi-accouplement (2) au deuxième demi-accouplement (3), à un état ouvert dans lequel aucun couple ne peut être transmis du premier demi-accouplement (2) au deuxième demi-accouplement (3), et
- un dispositif d'actionnement (21), lequel est conçu pour commander le premier dispositif d'ouverture (6-12, 15),
dans lequel le premier dispositif d'ouverture (6-12, 15) est disposé de manière séparée dans l'espace de la zone de transmission de couple (22-23) du dispositif d'accouplement (1), c'est-à-dire de la zone spatiale sur laquelle, dans l'état fermé du dispositif d'accouplement (1), une transmission de couple peut s'effectuer du premier demi-accouplement (2) au deuxième demi-accouplement (3),
**caractérisé par** un deuxième dispositif d'ouverture (6-10, 12-15),
lequel est conçu pour, sans utiliser le couple de fonctionnement, produire une deuxième force d'ouverture, par laquelle le dispositif d'accouplement (1) peut être amené de l'état fermé à l'état ouvert, dans lequel le dispositif d'actionnement (21) est conçu pour commander le deuxième dispositif d'ouverture (6-10, 12-15) et dans lequel un couple de fonctionnement pour lequel le deuxième dispositif d'ouverture (6-10, 12-15) est actif est inférieur à un couple de fonctionnement pour lequel le premier dispositif d'ouverture (6-12, 15) est actif.

2. Dispositif d'accouplement (1) selon la revendication 1, **caractérisé en ce que** le premier dispositif d'ouverture (6-12, 15) est disposé radialement plus à l'extérieur que la zone de transmission de couple (22-23).

3. Dispositif d'accouplement (1) selon l'une quelconque des revendications précédentes, **caractérisé en ce qu'**un demi-accouplement (2) mobile, lequel est l'un du premier demi-accouplement (2) et du deuxième demi-accouplement (3), est mobile dans la direction axiale du premier arbre ou moyeu (4) ou du deuxième arbre ou moyeu (5) et que le premier dispositif d'ouverture (6-12, 15) comprend :
- au moins une première surface de coulisse (10-12) disposée sur le demi-accouplement (2) mobile, qui s'étend dans une première direction d'extension sensiblement dans la direction périphérique du demi-accouplement (2) mobile et qui comporte une première courbure telle qu'une position change dans la direction axiale d'un point sur la première surface de coulisse (10-12) le long de la première direction d'extension, et
- au moins un premier suiveur de coulisse (6), qui est conçu pour, lors d'une rotation du demi-accouplement (2) mobile entrer en contact avec la première surface de coulisse (10-12) le long de la première direction d'extension, produire ainsi la première force d'ouverture et provoquer ainsi un mouvement du demi-accouplement (2) mobile dans la direction axiale, ce qui a pour effet que le dispositif d'accouplement (1) est amené de l'état fermé à l'état ouvert,
dans lequel le dispositif d'actionnement (21) est conçu pour amener l'au moins un premier suiveur de coulisse (6) en prise avec la première surface de coulisse (10-12) et hors de prise avec la première surface de coulisse (10-12).

4. Dispositif d'accouplement (1) selon la revendication 3, **caractérisé en ce qu'**au moins une première surface de coulisse (11) et l'au moins un premier suiveur de coulisse (6) forment conjointement une transmission à clavette.

5. Dispositif d'accouplement (1) selon l'une quelconque des revendications 3 à 4, **caractérisé en ce que** le premier dispositif d'ouverture (6-12, 15) comprend en outre une première surface de maintien ouvert (15), laquelle est disposée sur le demi-accouplement (2) mobile de telle sorte que le dispositif d'accouplement (1), lors d'une mise en contact de la première surface de maintien ouvert (15) par l'au moins un premier suiveur de coulisse (6), se trouve dans l'état ouvert, dans lequel la première surface de maintien ouvert (15) est disposée de manière adjacente à une zone de la première surface de coulisse (10-12) lors de la mise en contact de laquelle par l'au moins un premier suiveur de coulisse (6) le dispositif d'accouplement (1) se trouve dans l'état ouvert.

6. Dispositif d'accouplement (1) selon l'une quelconque des revendications 3 à 5, **caractérisé en ce que** l'au moins un premier suiveur de coulisse (6) peut être amené en prise avec l'au moins une première surface de coulisse (10-12) et/ou hors de prise avec l'au moins une première surface de coulisse (10-12) par un mouvement de l'au moins un premier suiveur de coulisse (6) dans la direction radiale du demi-accouplement (2) mobile, en particulier par un mécanisme à levier ou à coulisseau (19).

7. Dispositif d'accouplement (1) selon la revendication 6, **caractérisé en ce que** le mouvement de l'au moins un premier suiveur de coulisse (6) dans la direction radiale du demi-accouplement (2) mobile lors de la mise en prise avec l'au moins une première surface de coulisse (10-12) est provoqué au moins en partie par un ressort (20), en particulier par la détente du ressort (20).

8. Dispositif d'accouplement (1) selon l'une quelconque des revendications 3 à 7, **caractérisé en ce que** le premier dispositif d'ouverture (6-12, 15) comprend une pluralité de premières surfaces de coulisse (10-12), lesquelles sont disposées le long de la direction périphérique du demi-accouplement (2) mobile.

9. Dispositif d'accouplement (1) selon l'une quelconque des revendications 3 à 8, **caractérisé en ce que** le premier dispositif d'ouverture (6-12, 15) comprend une pluralité de premiers suiveurs de coulisse (6), lesquels sont disposés le long de la direction périphérique du demi-accouplement (2) mobile.

10. Dispositif d'accouplement (1) selon l'une quelconque des revendications précédentes, **caractérisé en ce que** le deuxième dispositif d'ouverture (6-10, 12-15) est disposé radialement plus à l'extérieur que la zone de transmission de couple (22-23) .

11. Dispositif d'accouplement (1) selon l'une quelconque des revendications précédentes, **caractérisé en ce que** le deuxième dispositif d'ouverture (6-10, 12-15) comprend :
- au moins une deuxième surface de coulisse (10, 12-15) disposée sur le demi-accouplement (2) mobile, qui s'étend dans une deuxième direction d'extension sensiblement dans la direction radiale du demi-accouplement (2) mobile et qui comprend une deuxième courbure telle qu'une position change dans la direction axiale d'un point sur l'au moins une deuxième surface de coulisse (10, 12-15) le long de la deuxième direction d'extension, et
- au moins un deuxième suiveur de coulisse (6), qui est conçu pour être en contact avec l'au moins une deuxième surface de coulisse (10, 12-15) le long de la deuxième direction d'extension, pour produire ainsi la deuxième force d'ouverture et pour provoquer ainsi un mouvement du demi-accouplement (2) mobile dans la direction axiale, ce qui a pour effet que le dispositif d'accouplement (1) est amené de l'état fermé à l'état ouvert,
dans lequel le dispositif d'actionnement (21) est conçu pour amener l'au moins un deuxième suiveur de coulisse (6) en prise avec l'au moins une deuxième surface de coulisse (10, 12-15), pour le déplacer le long de la deuxième direction d'extension et pour l'amener hors de prise avec la deuxième surface de coulisse (10, 12-15).

12. Dispositif d'accouplement (1) selon la revendication 11, **caractérisé en ce qu'**au moins une deuxième surface de coulisse (14) et l'au moins un deuxième suiveur de coulisse (6) forment conjointement une transmission à clavette.

13. Dispositif d'accouplement (1) selon l'une quelconque des revendications 11 à 12, **caractérisé en ce que** l'au moins une deuxième surface de coulisse (10, 12-15) comprend une deuxième surface de maintien ouvert (15), dans lequel le dispositif d'accouplement (1), lors d'une mise en contact de la deuxième surface de maintien ouvert (15) par l'au moins un deuxième suiveur de coulisse (6), se trouve dans l'état ouvert.

14. Dispositif d'accouplement (1) selon l'une quelconque des revendications 11 à 13, **caractérisé en ce que** l'au moins un deuxième suiveur de coulisse (6) peut être amené en prise avec la deuxième surface de coulisse (10, 12-15) et/ou hors de prise avec la deuxième surface de coulisse (10, 12-15) par un mouvement de l'au moins un deuxième suiveur de coulisse (6) dans la direction radiale du demi-accouplement (2) mobile, en particulier par un mécanisme à levier ou à coulisseau (19).

15. Dispositif d'accouplement (1) selon la revendication 14, **caractérisé en ce que** le mouvement de l'au moins un deuxième suiveur de coulisse (6) dans la direction radiale du demi-accouplement (2) mobile lors de la mise en prise avec la deuxième surface de coulisse (10, 12-15) et/ou le mouvement de l'au moins un deuxième suiveur de coulisse (6) le long de la deuxième direction d'extension est provoqué au moins en partie par un ressort (20), en particulier par la détente du ressort (20).

16. Dispositif d'accouplement (1) selon au moins l'une des revendications 11 à 15, **caractérisé en ce que** le deuxième dispositif d'ouverture (6-10, 12-15) comprend une pluralité de deuxièmes surfaces de coulisse (10, 12-15), lesquelles sont disposées le long de la direction périphérique du demi-accouplement (2) mobile.

17. Dispositif d'accouplement (1) selon au moins l'une des revendications 11 à 16, **caractérisé en ce que** le deuxième dispositif d'ouverture (6-10, 12-15) comprend une pluralité de deuxièmes suiveurs de coulisse (6), lesquels sont disposés le long de la direction périphérique du demi-accouplement (2) mobile.

18. Dispositif d'accouplement (1) selon l'une quelconque des revendications 3 à 9 et l'une quelconque des revendications 11 à 17, **caractérisé en ce que** l'au moins une première surface de coulisse (10-12) est au moins en partie identique à l'au moins une deuxième surface de coulisse (10, 12-15) et/ou que l'au moins un premier suiveur de coulisse (6) est sensiblement identique à l'au moins un deuxième suiveur de coulisse (6).

19. Dispositif d'accouplement (1) selon les revendications 5, 13 et 18, **caractérisé en ce que** la première surface de maintien ouvert (15) est sensiblement identique à la deuxième surface de maintien ouvert (15).

20. Commande de changement de vitesse pour une bicyclette avec au moins un dispositif d'accouplement (1) selon l'une quelconque des revendications précédentes.
